(19) Europäisches Patentamt
European Patent Office
Office européen des brevets

(11) Veröffentlichungsnummer: **0 298 290 B1**

(12) # EUROPÄISCHE PATENTSCHRIFT

(45) Veröffentlichungstag der Patentschrift: **15.04.92**

(51) Int. Cl.$^5$: **H02P 7/62**

(21) Anmeldenummer: **88109724.0**

(22) Anmeldetag: **18.06.88**

(54) **Verfahren und Einrichtung zum Betrieb einer Drehfeldmaschine.**

(30) Priorität: **07.07.87 CH 2581/87**

(43) Veröffentlichungstag der Anmeldung:
**11.01.89 Patentblatt 89/02**

(45) Bekanntmachung des Hinweises auf die Patenterteilung:
**15.04.92 Patentblatt 92/16**

(84) Benannte Vertragsstaaten:
**CH DE FR GB LI**

(56) Entgegenhaltungen:
**EP-A- 0 106 006**
**EP-A- 0 179 356**
**US-A- 4 431 957**

**BBC-NACHRICHTEN, Band 65, Nr. 11, 1983, Seiten 375-384; W. KUHN et al.: "Umrichter nach dem Unterschwingungsverfahren für industrielle Antriebe"**

(73) Patentinhaber: **BBC Brown Boveri AG**
**Haselstrasse**
**CH-5401 Baden(CH)**

(72) Erfinder: **Rufer, Alfred-Christophe**
**Steinbruchstrasse 34**
**CH-5200 Lauffohr(CH)**

EP 0 298 290 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Technisches Gebiet

Bei der Erfindung wird ausgegangen von einem Verfahren und einer Einrichtung zum Betrieb einer Drehfeldmaschine nach dem Oberbegriff der Patentansprüche 1 und 3.

Stand der Technik

Mit dem Oberbegriff des Patentanspruchs 1 nimmt die Erfindung auf einen Stand der Technik Bezug, der aus der EP-A1-0 106 006 bekannt ist. Dort wird ein Verfahren zur Vorgabe des Ständerdurchflutungsvektors von Drehstrommaschinen beschrieben, bei dem die effektive Lage des Ständerdurchflutungsvektors durch Schalten zwischen den Zeigerlagen, insbesondere im Bereich einer diskreten Zeigerlage, zwischen mehr als 2 benachbarten Zeigerlagen des Durchflutungszeigers in vor- und nacheilender Richtung hin- und/oder hergeschaltet wird. Die Umschaltung erfolgt nach einem fest abgelegten Pulsmuster.

Mit dem Oberbegriff des Patentanspruchs 3 nimmt die Erfindung auf einen Stand der Technik Bezug, der aus der DE-A1 3 438 504 bzw. EP-A2-0 179 356 bekannt ist. Dort wird bei hochdynamischen Drehfeldantrieben mit Stromrichterspeisung und direkter Selbstregelung der magnetische Flussvektor längs einer Sechskantbahn gesteuert. Von den Stromzuleitungen zur Drehfeldmaschine werden dazu Strom- und Spannungssignale abgeleitet und daraus orthogonale Flusskomponenten gewonnen. Diese werden in einem Koordinatenwandler in drei Phasen-Flusskomponenten umgewandelt, in einem nachgeschalteten Flussregler bzw. Vergleicher in ihrer Amplitude auf einen Flusssollwert begrenzt und in Abhängigkeit von einer flussabhängigen und einer drehmomentabhängigen Umschalteinrichtung zur Steuerung des Wechselrichters verwendet. Dabei treten unerwünschte Oberschwingungen auf.

Darstellung der Erfindung

Die Erfindung, wie sie in den Patentansprüchen 1 und 3 definiert ist, löst die Aufgabe, ein Verfahren und eine Einrichtung zum Betrieb einer Drehfeldmaschine anzugeben, mit denen mindestens eine Stromoberschwingung reduziert werden kann.

Ein Vorteil der Erfindung besteht darin, dass schon mit einem zweiten Koordinantenwandler und einer zweiten Vergleicherschaltung eine Zwölfkantbahn erzeugt werden kann, bei welcher die typischen fünften und siebten Oberschwingungen der Sechskant-Flusstrajektorie praktisch nicht mehr auftreten. Dabei bleibt das gut geregelte Drehmoment der Drehfeldmaschine unverändert. Die erfindungsgemässe Einrichtung erlaubt den Uebergang von Sechskant- auf z.B. Zwölfkantbetrieb.

Kurze Beschreibung der Zeichnungen

Die Erfindung wird nachstehend anhand von Ausführungsbeispielen erläutert. Es zeigen:

| | |
|---|---|
| Fig. 1 | ein Prinzipschaltbild einer Einrichtung zur direkten Selbstregelung von Drehmoment und Fluss einer Drehfeldmaschine mit einer Auswahlschaltung, |
| Fig. 2 | ein Schaltbild der Auswahlschaltung der Einrichtung gemäss Fig. 1, |
| Fig. 3 | einen Teil einer Vergleicherschaltung mit Speichereffekt der Einrichtung gemäss Fig. 1 für eine Flusskomponente, |
| Fig. 4 | Sechs- und Zwölfkantflusstrajektorien mit orthogonalen Flusskoordinaten, |
| Fig. 5 und 6 | Zeigerdiagramme von Spannungs- und Flussvektoren mit Sechskant-Flusstoleranzpolygonen, |
| Fig. 7 | ausschnittsweises Zeigerdiagramm eines Zwölfkant-Flusspolygons, |
| Fig. 8a - 8l, Fig. 9a - 9r | Signaldiagramme zur Einrichtung gemäss Fig. 1, |
| Fig. 10 | Signaldiagramme von Fluss- und Stromkomponenten, Oberschwingungsgehalt und Drehmomentistwert für Sechs- und Zwölfkant-Betrieb, |
| Fig. 11 | eine Brückenschaltung für 3 Phasen und 2 Stufen, |
| Fig. 12 | eine Brückenschaltung für 3 Phasen und 3 Stufen, |
| Fig. 13 | eine Brückenschaltung für m Phasen und l + 1 Stufen, |
| Fig. 14 | Spannungsvektoren von Schaltzuständen beim Zwei- und Dreistufen-Pulswechselrichter, |
| Fig. 15 | Spannungsverhältnisse beim Schaltzustand 1 gemäss Fig. 14, |
| Fig. 16 | eine Flusstrajektorie für 3 Phasen und 2 Stufen mit Zickzack-Segmenten, |

| | |
|---|---|
| Fig. 17 | eine Flusstrajektorie für 3 Phasen und 3 Stufen mit Zickzack-Segmenten, |
| Fig. 18 | eine Flussführungs- und Auswahlschaltung für eine Einrichtung gemäss Fig. 1, jedoch für m Phasen, |
| Fig. 19 | ein Prinzipschaltbild eines nicht direkt selbstgeregelten Antriebes, bei dem die aufeinanderfolgenden Peripherie-Flussvektoren mittels eines Ringzählers vorgegeben werden, mit einer Auswahl- und Impulslogikschaltung, |
| Fig. 20 | ein Schaltbild der Auswahlschaltung gemäss Fig. 19 und |
| Fig. 21 | eine auf m Phasen und mehr als 2 Stufen des Wechselrichters erweiterte Flussführungs- und Auswahlschaltung für eine Einrichtung gemäss Fig. 1. |

## Wege zur Ausführung der Erfindung

Fig. 1 zeigt ein Prinzipschaltbild einer Einrichtung zur direkten Selbstregelung von Drehmoment M und Fluss $\psi$ einer Drehfeldmaschine bzw. Asynchronmaschine 33 mit Ständerwicklung W1, W2, W3, die einen gemeinsamen Sternpunkt St aufweisen, vgl. auch Fig. 12. Die Asynchronmaschine 33 wird von einem selbstgeführten Wechselrichter 30 gespeist, dem eingangsseitig eine Eingangsgleichspannung Ud zugeführt ist. In der Speiseleitung der Ständerwicklung W3 ist ein Stromwandler 32 angeordnet, der ausgangsseitig eine orthogonale Ständerstromkomponente $i_\alpha$ einem Multiplizierer 40 und einem Momentrechner 49 liefert. Die Speiseleitungen der Ständerwicklungen W1 und W2 sind mit einem Differenzstromwandler 31 verbunden, der ausgangsseitig eine zu $i_\alpha$ orthogonale Ständerstromkomponente $i_\beta$ einem Multiplizierer 41 und dem Momentrechner 49 liefert. Die Multiplizierer 40 bzw. 41 multiplizieren die Werte $i_\alpha$ bzw. $i_\beta$ jeweils mit dem Ständerwicklungswiderstand R. Die Multiplizierer 40 bzw. 41 sind ausgangsseitig mit dem invertierenden Eingang eines Summierers 42 bzw. 43 verbunden. Ein Spannungswandler 34 ist eingangsseitig mit den Ständerwicklungen W1 und W2 und ausgangsseitig mit einem nichtinvertierenden Eingang des Summierers 42 verbunden, dem er eine Ständerspannungskomponente $U_\beta$ liefert. Ein Spannungswandler 34 ist eingangsseitig mit der Ständerwicklung W3 und dem Sternpunkt St und ausgangsseitig mit einem nichtinvertierenden Eingang des Summierers 43 verbunden, dem er eine zu $U_\beta$ orthogonale Ständerspannungskomponente $U_\alpha$ liefert. Die Summierer 42 und 43 sind ausgangsseitig mit Eingängen eines Integrierers 44 verbunden, der ausgangsseitig orthogonale magnetische Flusskomponenten $\psi_\alpha$ und $\psi_\beta$ einem ersten 90°/120°-Koordinatenwandler 45 mit 0° Phasenverschiebung, dem Momentrechner 49 und einem zweiten 90°/120°-Koordinatenwandler 56 mit 30° Phasenverschiebung mit Bezug auf den Koordinantenwandler 45 liefert.

Die Koordinatenwandler 45 bzw. 56 liefern ausgangsseitig relativ zueinander um 120° phasenverschobene $\beta$-Flusskomponenten $\psi_\beta 1$, $\psi_\beta 2$, $\psi_\beta 3$ bzw. $\psi_\beta 1'$, $\psi_\beta 2'$, $\psi_\beta 3'$ an Vergleicher 46 bzw. 57 mit Speichereffekt, deren Aufbau näher in Verbindung mit Fig. 3 erläutert ist. Die Vergleicher 46 und 57 vergleichen die $\beta$-Flusskomponenten mit einem Flusssollwert $\psi_s$, der von einem Proportional-Integral-Regler oder PI-Regler 54 geliefert wird. Vergleicherausganssignale K11, K12, K13 des Vergleichers 46 werden einerseits über einen digitalen Phasenschieber 47 um 240° phasenverschoben als Phasenschieberausgangssignale P1, P2, P3 einer näher in Fig. 2 dargestellten Auswahlschaltung 48 zugeführt und andererseits ersten Eingängen von Exklusiv-ODER-Elementen 59 bzw. 60 bzw. 61. Vergleicherausgangssignale K11', K12', K13' des Vergleichers 57 sind zweiten Eingängen der Exklusiv-ODER-Elementen 59 bzw. 60 bzw 61 zugeführt. Die Ausgänge der Exklusiv-ODER-Elemente 59, 60, 61 sind mit Eingängen eines UND-Gliedes mit negiertem Ausgang bzw. eines NAND-Gliedes 62 verbunden, dessen Ausgangssignal bzw. Zickzack-Signal Z2 der Auswahlschaltung 48 zugeführt ist. Die Exklusiv-ODER-Elemente 59, 60, 61 und das NAND-Glied 62 sind zu einer gestrichelt dargestellten Logikschaltung Y zusammengefasst.

Der Momentrechner 49 liefert ausgangsseitig einen Drehmomentistwert

$$M_i = 1,5 \bullet (\psi_\alpha \bullet i_\beta - \psi_\beta \bullet i_\alpha),$$

der einem nichtnegierten Eingang eines Summierers 53 zugeführt ist. Einem invertierenden Eingang des Summierers 53 ist von einer nicht dargestellten, übergeordneten Einrichtung ein Drehmomentsollwert $M_s$ zugeführt. Ausgangsseitig ist der Summierer 53, an dem die negative Drehmomentdifferenz - $\Delta M$ anliegt, einerseits mit dem Eingang des PI-Reglers 54 und andererseits mit einem Einang eines Vergleichers 55 verbunden. Der Vergleicher 55 vergleicht die negative Drehmomentdifferenz - $\Delta M$ mit einem vorgebba ren Drehmoment-Toleranzwert $\epsilon_M$ und liefert als Ausgangssignal eine Drehmoment-Schaltvariable $S_M$ einerseits an die Auswahlschaltung 48 und andererseits an eine Umschalteinrichtung 39.

Die Flusskomponenten $\psi_{\beta 1}$, $\psi_{\beta 2}$ und $\psi_{\beta 3}$ sind Eingängen eines Betragsbildners 50 zugeführt, dessen Ausgangssignal $| \psi_\beta |$ einem invertierenden Eingang eines Summierers 51 zugeführt ist. Ein nichtinvertierender Eingang des Summierers 51 ist mit dem Ausgang des PI-Reglers 54 verbunden. Ausgangsseitig ist der Summierer 51, an dem die Flussdifferenz $\Delta\psi$ abgreifbar ist, mit einem Eingang eines Vergleichers 52 verbunden. Der Vergleicher 52 vergleicht die Flussdifferenz $\Delta\psi$ mit einem vorgebaren Drehmoment-Toleranzwert $\epsilon_\psi$ und liefert als Ausgangssignal eine Fluss-Schaltvariable $S_\psi$ an eine Umschalteinrichtung 38.

Die Ausgangssignale bzw. Schaltzustandsvariablen S1, S2, S3 der Auswahleinrichtung 48 sind einer Nullzustandsauswahleinrichtung 37 sowie ersten Umschaltkontakten der Umschalteinrichtungen 38 und 39 zugeführt. Ausgangsseitig ist die Nullzustandsauswahleinrichtung 37 mit zweiten Umschaltkontakten der Umschalteinrichtung 38 verbunden. Die Umschalteinrichtung 38 ist einerseits mit zweiten Umschaltkontakten der Umschalteinrichtung 39 verbunden, an der ausgangsseitig Wechselrichter-Steuersignale SW1, SW2 und SW3 anliegen, die Steuereingängen des Wechselrichters 30 zugeführt sind. Die Nullzustandsauswahleinrichtung 37 sowie die Umschalteinrichtungen 38 und 39 sind zu einem gestrichelt dargestellten Signalumwandler 36 zusammengefasst.

Die von der Nullzustandsauswahleinrichtung 37 ausgangsseitig abgegebene Schaltzustansvariable $S_N$ weist in Abhängigkeit von den Schaltzustandsvariablen S1, S2, S3 die in Tabelle 1 angegebenen logischen Werte auf.

Tabelle 1:

| S1 | S2 | S3 | $S_N$ | Spannungsvektor |
|---|---|---|---|---|
| 1 | 0 | 0 | 0 | U1 |
| 1 | 1 | 0 | 1 | U2 |
| 0 | 1 | 0 | 0 | U3 |
| 0 | 1 | 1 | 1 | U4 |
| 0 | 0 | 1 | 0 | U5 |
| 1 | 0 | 1 | 1 | U6 |
| 1 | 1 | 1 | 1 | U0 |
| 0 | 0 | 0 | 0 | U0 |

Die Schaltzustandsvariablen S1, S2, S3 definieren sieben Spannungsvektoren U0 - U6, vgl. die Fig. 5 und 6, mit U1 = -U4, U2 = -U5, U3 = -U6 und U0 - 0.

Fig. 2 zeigt ein Schaltbild der Auswahlschaltung 48 von Fig. 1. Invertierenden Eingängen eines ODER-Gliedes 64 ist das Zickzack-Signal Z2 und von einer nicht dargestellten, übergeordneten Einrichtung ein Freigabesignal F zugeführt. Einem nichtnegierten Eingang des ODER-Gliedes 64 ist über einen Binärzähler bzw. einen Teiler 63 mit Divisor 2 die Drehmomentschaltvariable $S_M$ zugeführt. Ausgangsseitig ist das ODER-Glied 64 mit ersten Eingängen von UND-Gliedern 65, 66, 67 und UND-Gliedern mit invertierten Eingängen 68, 69, 70 verbunden. Die Phasenschieberausgangssignale P1 bzw. P2 bzw. P3 sind zweiten Eingängen der UND-Glieder 65 und 70 bzw. 66 und 68 bzw. 67 und 69 zugeführt. ODER-Glieder 71 bzw. 72 bzw. 73 sind eingangsseitig mit den Ausgängen der UND-und NOR-Glieder 65 und 68 bzw. 66 und 69 bzw. 67 und 70 verbunden; ausgangsseitig sind an ihnen die Schaltvariablen S1 bzw. S2 bzw. S3 abgreifbar.

Fig. 3 zeigt die Schaltung eines Teils des Vergleichers 46 mit Speichereffekt für die Flusskomponente $\psi_{\beta 1}$. Die Schaltungen für die Flusskomponenten $\psi_{\beta 2}$ und $\psi_{\beta 3}$ stimmen mit derjenigen für $\psi_{\beta 1}$ überein. Der Flusssollwert $\psi_s$ wird einerseits direkt einem ersten Eingang und andererseits über einen invertierenden Ver stärker 74 einem zweiten Eingang eines Umschalters- bzw. Wechslers 75 zugeführt, der ausgangsseitig mit einem invertierenden Eingang eines Vergleichers 76 verbunden ist. Einem nichtinvertierenden Eingang dieses Vergleichers 76 ist die Flusskomponente $\psi_{\beta 1}$ ($\psi_{\beta 2}$, $\psi_{\beta 3}$) zugeführt. Das Vergleicherausgangssignal K11 (K12, K13) des Vergleichers 76 ist einem Steuersignaleingang des Wechslers 75 zugeführt, so dass dieser in Abhängigkeit von einer Grenzwertüberschreitung im Vergleicher 76 von $\psi_s$ auf - $\psi_s$ und umgekehrt umgeschaltet wird.

Die Wirkung der in Fig. 1 dargestellten Schaltung wird nachstehend anhand der Fig. 4 - 10 erläutert.

In Fig. 4 bezeichnet $\psi$ einen Flussvektor mit orthogonalen Flusskomponenten $\psi_\alpha$, $\psi_\beta$, der im Uhrzeigersinn längs einer Zwölfkant-Flusstrajektorie B rotiert, welche sechs gerade Segmente a und sechs Zickzack-Segmente b aufweist. $\alpha$ und $\beta$ bezeichnen orthogonale Ständerachsen. Die Zwölfkant-Flusstrajektorie B entsteht durch Ueberlagerung einer gestrichelt dargestellten Sechskant-Flusstrajektorie A1 mit Spitze in der $\alpha$-Achse und einer gepunktet dargestellten Sechskant-Flusstrajektorie A2 mit Spitze in Richtung der $\beta$-Achse, welche gegenüber A1 um 30° gedreht ist. Die Zickzack-Segmente b eliminieren die Ecken der ursprünglichen Sechskant-Flusstrajektorie A1 und somit deren Effekt auf die Stromform, vgl. die Ständer-

stromkomponente $i_\alpha$ in Fig. 10c. Dort bezieht sich der linke Teil der Darstellung auf Sechskant-Betrieb gemäss der Flusstrajektorie A1 und der rechte Teil auf Zwölfkant-Betrieb gemäss der Flusstrajektorie B. Sechskant-Betrieb ist ohne und Zwölfkant-Betrieb mit einem zweiten Koordinatenwandler 56, einem zweiten Vergleicher 57 und einer Logikschaltung Y möglich, wobei die Schaltung gemäss Fig. 1 einen Uebergang von Sechskant-auf Zwölfkant-Betrieb während des Betriebes erlaubt. Diese Ergänzung ermöglicht es, eine um einen Faktor 2 erhöhte Sektoraufteilung (12 Zonen anstelle von 6) zu erreichen, mit der die Flusstrajektorie verbessert werden kann und somit die typischen Oberschwingungen der 6kant-Flusstrajektorie (5. und 7. Oberschwingung) wesentlich reduziert werden können.

Die Selbstregelung benutzt interne, phasenbezogene Maschinengrössen, die in der Flussnachbildung aus den $\alpha$- und $\beta$-Flusskomponenten zu wählen sind. Besonders geeignet dafür sind die phasenbezogenen $\beta$-Flusskomponenten $\psi_{\beta 1}$, $\psi_{\beta 2}$, $\psi_{\beta 3}$, vgl. Fig. 5. $\beta 1$ - $\beta 3$ bezeichnen 120°-Projektionsachsen und U1 - U6 6 diskrete Spannungsvektoren, die über den dreiphasigen Wechselrichter 30 bei konstanter Eingangsgleichspannung Ud zusätzlich zum Spannungsvektor U0 = 0 zur Steuerung der Asynchronmaschine 33 zur Verfügung stehen. Bei Grundfrequenztaktung nimmt der Spannungsvektor in zyklischer Folge nacheinander die durch U1, U2 ... bestimmten diskreten Werte an. Die Verweildauer in jeder Position beträgt bei stationärem Betrieb 1/6 der Spannungsperiode. Der Zeitverlauf der drei Ständerwicklungsspannungen ergibt sich als Projektion des sich sprunghaft im Uhrzeigersinn bewegenden Spannungsvektors auf die drei Ständerwicklungs- bzw. Projektionsachsen $\beta 1$, $\beta 2$, $\beta 3$. Entsprechend erhält man Ständerspannungskomponenten $U_\alpha$ und $U_\beta$, vgl. Fig. 8k, 8l, 9b und 9c des dreiphasigen Spannungssystems als Projektion zu aufeinander senkrechten, ebenfalls ruhenden Ständerachsen $\alpha$ und $\beta$.

Vernachlässigt man die im Feldschwächbereich gegenüber der Ständerspannung kleine Spannung $| i | \bullet R_s$ ($| i |$ = Ständerstrom), die an den Kupferwiderständen der Ständerwicklungen abfällt, so bestimmt der jeweilige Spannungsvektor die jeweilige Lage des Flussvektors $\psi$ hinsichtlich Geschwindigkeit und Richtung.

Die Führung des Maschinen-Flussvektors auf einer 6kant-Bahn mit Hilfe von drei nach den phasenbezogenen $\beta$-Flusskomponenten orientierten, schraffiert angedeuteten Toleranzbändern ist direkt durch das Einschalten von den zur Verfügung stehenden sieben Umrichterspannungen U0 - U6 möglich.

Die Figuren 8a - 8d zeigen den Verlauf der $\psi_\alpha$- und $\psi_\beta$-Flusskomponenten zusammen mit den phasenbezogenen $\psi_{\beta 1}$-, $\psi_{\beta 2}$-und $\psi_{\beta 3}$-Flusskomponenten. Diese Grössen werden nach den folgenden Gleichungen (1) gebildet:

$$\psi_{\beta 1} = \psi_\beta,$$
$$\psi_{\beta 2} = - \psi_\beta/2 - \psi_\alpha \bullet \sqrt{3}/2,$$
$$\psi_{\beta 3} = - \psi_\beta/2 + \psi_\alpha \bullet \sqrt{3}/2. \quad (1)$$

In dem aus drei Vergleichern gemäss Fig. 3 bestehenden zusammengesetzten Vergleicher 46 werden Informationen über phasenbezogene Flusstoleranzbänder gewonnen. Wird die obere, positive Grenze des Tolerenzbandes $\psi_S$ in einer Phase erreicht, so kippt der Vergleicher bzw. Komperator der entsprechenden Phase von "0" auf "1". Umgekehrt kippt der Komprator zurück von "1" auf "0", wenn die untere, negative Grenze des Bandes - $\psi_S$ erreicht ist. Die den Flussgrössen in Fig. 8a - 8d zugeordneten Vergleicherausgangssignale K1, K2 und K3 sind in den Fig. 8e - 8g dargestellt. In den Fig. 8h - 8j sind die entsprechenden Phasenschieberausgangssignale P1, P2 und P3 angegeben, welche die Spannung des Wechselrichters 30 bestimmen. Im Falle der Grundfrequenztaktung verursacht dieser in den Fig. 8k und 8l dargestellte Spannungsverlauf den trapezoidförmigen $\psi_\beta$-Flussverlauf, der in Zeigerdarstellung dem Umlauf in einer 6kant-Bahn entspricht.

Aus dem Zeitdiagramm von Fig. 8 kann auch das Ansteuergesetz für eine direkte Selbstregelung gewonnen werden. Zwischen den Ausgängen der den Phasen richtig zugeordneten Phasenschieberausgangssignale P1, P2, P3 besteht die Beziehung:

$$P1 = K12,$$
$$P2 = K13,$$
$$P3 = K11. \quad (2)$$

Diese Gleichungen (2) entsprechen Phasenverschiebungen zwischen Spannungen und Flüssen von 240°. Der Steuerbefehl bzw. die Schaltzustandsvariable S1 ist in Phase mit der ersten Phasenspannung (W1) der Asynchronmaschine 33. Parallel zu dieser Spannung ist die $\alpha$-Achse definiert, so dass $U_\beta$ dem Steuerbefehl um 90° nacheilt. Die Flusskomponente $\psi_\beta$ ist gegenüber $U_\beta$ um weitere 90° verzögert (Spannungsintegral). So weisen S1 und die $\psi_{\beta 1}$-Flusskomponente 180°-Phasenverschiebung auf. Auf Grund der Trapezform des Flusses wird die Schaltschwelle $\psi_S$ des Vergleichers 46 60° nach dem positiv

gerichteten Nulldurchgang erreicht. Ein Addieren dieser Teilverschiebungen liefert: 90° + 90° + 60° = 240°, entsprechend Gleichung (2).

Mit dem zweiten Koordinatenwandler 56 werden drei phasenbezogene Flusskomponenten $\psi_{\beta 1'}$, $\psi_{\beta 2'}$, $\psi_{\beta 3'}$ erzeugt, die gegenüber den drei Flusskomponenten $\psi_{\beta 1}$, $\psi_{\beta 2}$, $\psi_{\beta 3}$ des ersten Koordinatenwandlers 45 um einen Verschiebungswinkel $\phi$ = 30° phasenverschoben sind. Sie werden nach folgenden Gleichungen gewonnen:

$$\psi_{\beta 1'} = \psi_\beta \bullet \sqrt{3}/2 - \psi_\alpha/2,$$
$$\psi_{\beta 2'} = - \psi_\beta \bullet \sqrt{3}/2 - \psi_\alpha/2,$$
$$\psi_{\beta 3'} = \psi_\alpha. \qquad (3)$$

Dieses zweite 30°-Flusskomponentensystem wird, gleich wie beim ersten Kanal, dem Vergleicher 57 zugeführt, der gleich aufgebaut ist wie der Vergleicher 46. Die damit gebildeten, schraffiert dargestellten Toleranzbänder für die $\beta$-Flusskomponenten $\psi_{\beta 1'}$, $\psi_{\beta 2'}$, $\psi_{\beta 3'}$ sind im Zeigerdiagramm von Fig. 6 zu sehen. $\beta 1'$, $\beta 2'$ und $\beta 3'$ bezeichnen 120°-Projektionsachsen. Die neuen Toleranzbänder bilden eine 6kant-Figur, bei der in diesem Fall zwei "Spitzen" des 6kants nach der $\beta$-Achse orientiert sind und nicht nach der $\alpha$-Achse, wie bei der ersten 6kant-Figur gemäss Fig. 5.

Durch Ueberlagern der beiden 6kant-Flusstoleranzpolygonen wird die schon erwähnte 12kant-Figur gewonnen, vgl. Fig. 7. Es stehen sechs Vergleicherausgangssignale K11 - K13, K11′ - K13′ zur Verfügung, deren zeitlicher Verlauf in den Fig. 9e - 9i dargestellt ist, mit Bezug auf zugeordnete orthogonale Flusskomponenten $\psi_\alpha$,$\psi_\beta$ in Fig. 9a und orthogonale Ständerspannungskomponenten $U_\alpha$, $U_\beta$ in den Fig. 9b und 9c. In Fig. 9 sind zwischen beliebig gewählten Zeitpunkten t1 und t2 die Signale im Detail dargestellt, im übrigen nur die Hüllkurven schraffiert.

Fig. 9k zeigt das Zickzack-Signal Z2, das nach folgender Gleichung (4) gewonnen wird:

$$Z2 = \overline{K11 \ddagger K11'} \wedge \overline{K12 \ddagger K12'} \wedge \overline{K13 \ddagger K13'}. \qquad (4)$$

Bei Z2 = "1" stimmen die Vergleicherausgangssignale K11, K12, K13 des ersten Kanals mit den Vergleicherausgangssignalen K11′, K12′,K13′ des zweiten Kanals überein. Mit Z2 = "1" befindet sich der Flussvektor $\psi$ in einer Uebergangszone zwischen zwei benachbarten 60°-Sektoren der 6kant-Figur. Die Korrektur der 6kant-Flusstrajektorie A1 kann mit Hilfe des Zickzack-Signals Z2 eingeleitet werden. Bei Z2 = "0" wird angenommen, dass keine Flussbetragskorrektur einzuleiten ist, so dass als Flusstrajektorie ein gerades Segment a der 6kant-Flusstrajektorie A1 gefahren wird. Durch drehmomentabhängige Schalthandlungen tritt ein Pulsspiel auf, wobei als Spannungsvektor ausser U0 und mit Schaltzustand 000 (Kodierung 10 10 10) oder 111 (Kodierung 01 01 01), vgl. Tab. 2, Schaltzustände Nr. 8 und 7, immer der gleiche Spannungsvektor, z.B. UI in Fig. 7, eingeschaltet wird. Dieser ist mit P1, P2, P3 von dem ersten Kanal der Selbstregelung vorgegeben, vgl. die Fig. 9m -9o. Die daraus abgeleiteten Schaltzustandsvariablen S1 - S3 sind in Fig. 9p - 9r dargestellt.

Bei Z2 = "1" kann, falls keine Flussbetragskorrekturen eingeleitet werden, als Flusstrajektorie ein Zickzack-Segment b gefahren werden. Durch die drehmomentabhängigen Schalthandlungen tritt jetzt ein komplizierteres Pulsspiel auf, wobei als Spannungsvektor, ausser U0 (Zustand 000 oder 111), alternierend zwei verschiedene Spannungen UI und UII eingeschaltet werden, vgl. Fig. 7. UI wird durch P1, P2, P3 vom ersten Kanal der Selbstregelung vorgegeben mit der Kodierung:

$$S1 = P1,$$
$$S2 = P2,$$
$$S3 = P3. \qquad (5)$$

Als zweite Spannung UII wird ein um 60° voreilender Spannungsvektor gewählt. Die Kodierung dieses Vektors wird von P1, P2, P3 gewonnen, wobei folgende Gleichung (6) gilt:

$$S1 = \overline{P2},$$
$$S2 = \overline{P3},$$
$$S3 = \overline{P1}. \qquad (6)$$

Die alternierende Anwahl der Spannungsvektoren UI und UII wird mit der Auswahlschaltung 48, vgl. Fig. 1 und 2, realisiert. Dazu wird die drehmomentabhängige Schaltvariable $S_M$ vgl. Fig. 2 und 9j, als Digitalsignal auf den Binärzähler bzw. Teiler 63 geführt. Damit wird ein Umschaltsignal S 64 generiert, vgl.

Fig. 91, mit dem bei jeder zweiten Schalthandlung durch die Drehmoment-Schaltvariable $S_M$ die voreilende Spannung, z.B. UII, eingeschaltet wird. Resultat dieser Umschaltungen ist ein Zickzack-Segment b für die Flusstrajektorie, das sich aus alternierenden Trajektorienabschnitten C in Richtung der ersten Spannung UI und Trajektorienabschnitten D in Richtung der zweiten Spannung UII zusammensetzt, vgl. Fig. 7.

Fig. 10e zeigt, dass beim Uebergang von 6kant-Betrieb (Flusstrajektorie A1) auf 12kant-Betrieb (Flusstrajektorie B) das gut geregelte Drehmoment (Drehmomentistwert $M_i$) unverändert bleibt. $|\,i\,|$, vgl. Fig. 10d, stellt ein Mass für den Oberschwingungsgehalt dar, der für 12kant-Betrieb gegenüber 6kant-Betrieb deutlich reduziert ist. Die entsprechenden orthogonalen Flusskomponenten $\psi_\alpha$ und $\psi_\beta$ sind in den Fig. 10a und 10b dargestellt.

Das beschriebene Verfahren zur Kompensation von Oberschwingungen ist nicht auf übliche zweistufige Wechselrichter mit 3Phasen-Wechselspannung, vgl. Fig. 11, beschränkt, sondern allgemein für q-stufige Wechselrichter mit m Phasen anwendbar, vgl. Fig. 13. In den Fig. 11 - 13 bezeichnen Q1 - Ql Gleichstromquellen, die zusammen mit Umschaltern US1 ... USm Wechselrichter darstellen, welche von einer Ventilsteuerlogik 77 in Abhängigkeit von Schaltzustandsvariablen S11 ... S1k gesteuert werden. W1...Wm bezeichnen Ständerwicklungen einer Drehfeldmaschine.

Ein Wechselrichter mit m Phasen und q = l + 1 Stufen pro Phase, vgl. Fig. 13, ermöglicht an seiner Wechselspannungsseite das Erzeugen von $q^m$ Spannungsvektoren, die durch $q^m$ Schaltzustände de finiert sind. Von den $q^m$ Spannungsvektoren sind q identisch und gleich Null. Für eine Phase werden die q verschiedenen Stufen über ein binäres Wort mit einer Bit-Länge k angewählt und mittels der Ventilsteuerlogik 77 angesteuert. Für die Wortlänge k gilt:

$$2^k \geqq q. \qquad (7)$$

Von den $q^m$ - q Spannungsvektoren, die zur Speisung einer mehrphasigen Last zur Verfügung stehen, werden für das beschriebene Verfahren nicht alle benötigt. Es wird eine Anzahl von r Peripherie-Vektoren gewählt, die möglichst mit gleichem Phasenabstand über die elektrische Periode von 360° verteilt sind, wobei deren Betrag möglichst nahe dem maximalen Betrag der Spannung eines Wechselrichters mit m Phasen liegen, bei dem nur zwei Stufen angewählt werden. Im trivialen Beispiel der Dreiphasen-Zweistufen-Brückenschaltung gemäss Fig. 11 sind die r zu wählenden Peripherie-Vektoren die 6 Vektoren U1 - U6, die nicht 0 sind, vgl. auch Fig. 16. $r = 2^3 - 2 = 8 - 2 = 6$, vgl. auch Tabelle 1.

Als zweites Beispiel soll ein in Fig. 12 deragestellter Dreiphasen-Dreistufen-Wechselrichter erwähnt werden. Von den insgesamt $3^3 = 27$ Schaltzuständen bestimmen 27 - 3 Schaltzustände einen Spannungsvektor, der nicht Null ist. Von den 24 möglichen Spannungen werden 12 gewählt. Diese r Peripherie-Vektoren weisen einen gleichen Phasenabstand von 30° auf. Diese Peripherie-Vektoren sind in Fig. 17 mit U1, U9, U2, U10, U3, U11, U4, U12, U5, U13, U6 und U14 gekennzeichnet. Für eine Phase werden für die Anwahl der drei Stufen zwei bit benötigt, vgl. die Kodierung in Tab. 2.

TABELLE 2

| Nr. | Symbol | Kodierung | $U_{w1w2}/Ud$ | $U_{w2w3}/Ud$ | $U_{w1}/Ud$ | $U_{w2}/Ud$ | $U_\alpha/Ud$ | $U_\beta/Ud$ | $\lvert U\rvert/Ud$ | arc(U) |
|---|---|---|---|---|---|---|---|---|---|---|
| SCHALTZUSTAND | | | SPANNUNGEN | | | | SPANNUNGS-VEKTOR | | | |
| | | | verkettet | | Phase | | rechtwinklige α-ß - Kompon. | | Betrag und Winkel | |
| **2Stufen-Wechselrichter** | | | | | | | | | | |
| 1 | \ / / | 01 10 10 | 1 | 0 | 2/3 | -1/3 | 2/3 | 0 | 2/3 | 0° |
| 2 | \ \ / | 01 01 10 | 0 | 1 | 1/3 | 1/3 | 1/3 | 1/3√3 | 2/3 | 60° |
| 3 | / \ / | 10 01 10 | -1 | 1 | -1/3 | 2/3 | -1/3 | 1/3√3 | 2/3 | 120° |
| 4 | / \ \ | 10 01 01 | -1 | 0 | -2/3 | 1/3 | -2/3 | 0 | 2/3 | 180° |
| 5 | / / \ | 10 10 01 | 0 | -1 | -1/3 | -1/3 | -1/3 | -1/3√3 | 2/3 | 240° |
| 6 | \ / \ | 01 10 01 | 1 | -1 | 1/3 | -2/3 | 1/3 | -1/3√3 | 2/3 | 300° |
| 7 | \ \ \ | 01 01 01 | 0 | 0 | 0 | 0 | 0 | 0 | 0 | - |
| 8 | / / / | 10 10 10 | 0 | 0 | 0 | 0 | 0 | 0 | 0 | - |
| **zusätzlich beim 3Stufen-Wechselrichter** | | | | | | | | | | |
| 9 | \ – / | 01 00 10 | 1/2 | 1/2 | 1/2 | 0 | 1/2 | 1/6√3 | 1/3√3 | 30° |
| 10 | – \ / | 00 01 10 | -1/2 | 1 | 0 | 1/2 | 0 | 1/3√3 | 1/3√3 | 90° |
| 11 | / \ – | 10 01 00 | -1 | 1/2 | -1/2 | 1/2 | -1/2 | 1/6√3 | 1/3√3 | 150° |
| 12 | / – \ | 10 00 01 | -1/2 | -1/2 | -1/2 | 0 | -1/2 | -1/6√3 | 1/3√3 | 210° |
| 13 | – / \ | 00 10 01 | 1/2 | 1 | 0 | -1/2 | 0 | -1/3√3 | 1/3√3 | 270° |
| 14 | \ / – | 01 10 00 | 1 | -1/2 | 1/2 | -1/2 | 1/2 | -1/6√3 | 1/3√3 | 330° |
| 15 | \ – – | 01 00 00 | 1/2 | 0 | 1/3 | -1/6 | 1/3 | 0 | 1/3 | 0° |
| 16 | \ \ – | 01 01 00 | 0 | 1/2 | 1/6 | 1/6 | 1/6 | 1/6√3 | 1/3 | 60° |
| 17 | – \ – | 00 01 00 | -1/2 | 1/2 | -1/6 | 1/3 | -1/6 | 1/6√3 | 1/3 | 120° |
| 18 | – \ \ | 00 01 01 | -1/2 | 0 | -1/3 | 1/6 | -1/3 | 0 | 1/3 | 180° |
| 19 | – – \ | 00 00 01 | 0 | -1/2 | -1/6 | -1/6 | -1/6 | -1/6√3 | 1/3 | 240° |
| 20 | \ – \ | 01 00 01 | 1/2 | -1/2 | 1/6 | -1/3 | 1/6 | -1/6√3 | 1/3 | 300° |
| 21 | – / / | 00 10 10 | 1/2 | 0 | 1/3 | -1/6 | 1/3 | 0 | 1/3 | 0° |
| 22 | – – / | 00 00 10 | 0 | 1/2 | 1/6 | 1/6 | 1/6 | 1/6√3 | 1/3 | 60° |
| 23 | / – / | 10 00 10 | -1/2 | 1/2 | -1/6 | 1/3 | -1/6 | 1/6√3 | 1/3 | 120° |
| 24 | / – – | 10 00 00 | -1/2 | 0 | -1/3 | 0 | -1/3 | 0 | 1/3 | 180° |
| 25 | / / – | 10 10 00 | 0 | -1/2 | -1/6 | -1/6 | -1/6 | -1/6√3 | 1/3 | 240° |
| 26 | – / – | 00 10 00 | 1/2 | -1/2 | 1/6 | -1/3 | 1/6 | -1/6√3 | 1/3 | 300° |
| 27 | – – – | 00 00 00 | 0 | 0 | 0 | 0 | 0 | 0 | 0 | - |

Die Daten aus Tabelle 2 sowie die Fig. 14 und 15 sind, mit angepassten Bezeichnungen, bekannt aus der Dissertation von Manfred W. Gekeler, Dreiphasige spannungseinprägende Dreistufenwechselrichter, Fachbereich 17, Elektr. Energietechnik der Technischen Hochschule Darmstadt, 28. Juni 1984 (Tag der Einreichung), S. 18 - 21.

Tabelle 2 zeigt Schaltzustandskodierungen, Spannungen und Spannungsvektoren für 27 Schaltzustände. Der Schaltzustand Nr. 9 entspricht $U_{w16t}$ = Ud/2, $U_{w26t}$ = 0, $U_{w36t}$ = -Ud/2, vgl. Fig. 15, wobei Uw ist ... die Spannung zwischen dem Punkt $W_1$ .... und dem Sternpunkt ST bezeichnet.

Fig. 14 zeigt durch die Schaltzustandsnummern gemäss Tabelle 2 gekennzeichnete Spannungsvektoren beim Zweistufen-Wechselrichter (1-8) sowie gemäss Tabelle 2 beim Dreistufen-Wechselrichter (1 - 27). In Fig. 15 sind die Spannungsverhältnisse beim Schaltzustand 1 dargestellt, wobei der nicht dargestellte Spannungsvektor in Richtung der $\alpha$-Achse zeigen würde.

Mit r Vektoren, die nacheinander angewählt oder mittels Pulsspiel alternierend mit dem Nullzustand eingeschaltet werden, ist für die Flusstrajektorie einer Drehfeldmaschine ein r seitiges Polygon definiert, das r gerade Segmente aufweist. Bei einem angewählten Spannungsvektor läuft der Flussvektor auf einem zu diesem Spannungsvektor parallelen geraden Segment. Bei der Anwahl des Spannungs-Nullvektors bleibt der Flussvektor stehen. Im Falle der Dreiphasen-Zweistufen-Wechselrichterschaltung ist das r-seitige Polygon eine 6kant-Bahn, wie sie vom Verfahren mit direkter Selbstregelung aus der eingangs genannten DE-A1 3 438 504 bekannt ist. Die Führungsschaltung besteht in diesem Falle aus einem Komponentenwandler 78 und einem Vergleicher 79, vgl. Fig. 18. Die Anwahl eines Peripherie-Vektors oder des Nullzustandes wird über einen Digitalbefehl bzw. die Drehmoment-Schaltvariable $S_M$, vgl. Fig. 1, realisiert. $S_M$ wird von einem Drehmoment-Zweipunktregler bzw. dem Vergleicher 55 bestimmt. Der Komponentenwandler 78 liefert ausgangsseitig Flusskomponenten $\psi_{\beta 1}$ ... $\psi_{\beta m}$ mit einem gleichen Phasenabstand von 360°/m an den Vergleicher 79, dessen Ausgangssignale K11 ... K1m der Auswahlschaltung 80 zugeführt sind. Am Ausgang der Auswahlschaltung 80 sind je Phase k Schalt zustandsvariable: S11 ... S1k, S21 ... S2k, ... Sm1 ... Smk abgreifbar.

Ein r-seitiges Polygon kann ebenfalls bei einem nicht direkt selbstgeregelten Antrieb als Flusstrajektorie gefahren werden. Die aufeinanderfolgende Anwahl der r Peripherie-Vektoren wird in diesem Fall von einem Ringzähler 88, vgl. Fig. 19, bestimmt. Die Bestimmung des Mittelwertes für die Ausgangsspannung erfolgt über eine klassische Pulsbreitenmodulation mittels eines Sägezahngenerators 91, eines Summierers 92 und eines Vergleichers 93, dessen Ausgangssignal S93 einer Auswahlschaltung 89 zugeführt ist. Von den Speiseleitungen der Asynchronmaschine 33 werden mittels Stromwandlern 84 und 32 Ständerstromkomponenten $i_{w1}$ und $i_{w3}$ gewonnen und einem Drehzahlregler 86 zugeführt. Ein derartiger Drehzahlregler ist aus der deutschen Firmenzeitschrift BBC-Nachrichten 65 (1983), S. 375 - 384, insbesondere dort Bild 10, bekannt. Dem Drehzahlregler 86 wird von einer nicht dargestellten, übergeordneten Einrichtung ein Drehzahlsollwert $n_S$ und von einem mit dem Rotor der Asynchronmaschine 33 gekoppelten Drehzahlgeber 85 ein Drehzahlistwert $n_i$ zugeführt. Ausgangsseitig liefert der Drehzahlregler 86 einerseits ein frequenzbestimmendes Signal f über einen Gleichspannungs-Frequenzumsetzer 87 an den Ringzähler 88 und andererseits ein spannungsbestimmendes Signal U an einen nichtinvertierenden Eingang des Summierers 92. Der Sägezahngenerator 91 ist ausgangsseitig an einen invertierenden Eingang des Summierers 92 angeschlossen. Der Vergleicher 93 erhält eingangsseitig das Ausgangssignal des Summierers 92. Die Schaltzustandsvariablen S11 ... S1k, ... Sm1 ... Smk am Ausgang der Auswahlschaltung 89 werden zur Steuerung des Wechselrichters 30 verwendet.

Fig. 20 zeigt ein Schaltbild der Auswahlschaltung 89 von Fig. 19. Mit 94 ist ein Dekodierer bezeichnet, mit 95 ein Kodierer, mit 96 ein Binärteiler für das Ausgangssignal S93, mit 97 ein ODER-Glied mit zwei invertierenden Eingängen für das Freigabesignal F und das Zickzack-Signal Z vom Ausgang des Dekodierers 94. Der Ausgang des Binärteilers 96 ist mit einem nichtinvertierenden Eingang des ODER-Gliedes 97 verbunden. Die Ausgangssignale C1 ... Cm sind dem Dekodierer 94, dem Kodierer 95 und UND-Gliedern U11 ... U1m zugeführt. m Ausgangssignale des Kodierers 95 sind UND-Gliedern U21 ... U2m zugeführt. Das Ausgangssignal des ODER-Gliedes 97 ist nichtinvertierenden Eingängen der UND-Glieder U11 ... U1m sowie invertierenden Eingängen der UND-Glieder U21 ... U2m zugeführt. Die Ausgänge der UND-Glieder U11 und U21 sind mit Eingängen eines ODER-Gliedes 01 verbunden, die Ausgänge der UND-Glieder U12 und U22 mit Eingängen eines ODER-Gliedes 02 usw. Die Ausgänge der ODER-Glieder 01 ... 0m sind einem Signalumwandler 36 gemäss Fig. 1 zugeführt, der jedoch von drei auf m Phasen erweitert ist.

Der Kodierer 95 bestimmt den "Alternativ"-Spannungsvektor der gegenüber dem normalen gedreht ist. Der Signalumwandler 36 ermöglicht es, über das Signal S93 entweder den Peripherie-Vektor oder den Nullzustand anzuwählen.

Fig. 21 zeigt Flussführungsschaltungen F1 ... Fp, einen digitalen Phasenschieber 98 und eine Auswahlschaltung 99 für den direkt selbstgeregelten Betrieb einer Drehfeldmaschine mit m Phasen und mehr als zwei Stufen je Phase. p bezeichnet die Anzahl Flussführungsschaltungen, die ab der zweiten durch Verdoppelung gebildet sind. Die in Fig. 21 dargestellte Schaltung stellt eine ohne weiteres ersichtliche Erweiterung zum dem entsprechenden Schaltungsteil (Bauelemente 45 - 48, 56, 57, Y) von Fig. 1 dar, so dass sich eine Darstellung der übrigen Bauelemente erübrigt. KW1, KW1'; KW2, KW2' ... bezeichnen m-phasige Koordinatenwandler, V1, V1'; V2, V2' ... jeweils nachgeschaltete m-phasige Vergleicher, Y21, Y22 ... Ypp-1 Logikschaltungen mit gleichem Aufbau wie die Logikschaltung Y, nur von drei auf m Phasen erweitert. Z2 ... Zp bezeichnen Zickzacksignale, die vom Ausgang der Logikschaltungen Y21 ... Ypp-1 der Auswahlschaltung 99 zugeführt sind, welche gleich aufgebaut ist wie die in Fig. 2 dargestellte Auswahlschaltung 48, nur von drei auf m Phasen erweitert. Ausgangsseitig sind an der Auswahlschaltung Schaltzustandsvariable S11 ... S1k, ... Sm1 ... Smk abgreifbar und einem entsprechend von drei auf m Phasen erweiterten Signalumwandler 36 gemäss Fig. 1 zugeführt. $\psi_{\beta 11}$ ... $\psi_{\beta 1m}$ bezeichnen m Komponenten am Ausgang des

ersten Koordinatenwanlders KW1 mit einem Phasenabstand relativ zueinander von 360°/m, $\psi_{\beta 11'}$ ... $\psi_{\beta 1m'}$ m Flusskomponenten am Ausgang des zweiten Koordinatenwandlers KW1′, die relativ zu den Flusskomponenten am Ausgang von KW1 um $\phi$ = 180°/($2^p$ • m) phasenverschoben sind usw. Für Zj gelten die Beziehungen:

$$Z2 = \overline{K11 \not\equiv K11'} \wedge \overline{K12 \not\equiv K12'} \wedge \ldots \overline{K1m \not\equiv K1m'},$$

$$Zj = \sum_{i=1}^{j-1} \overline{Ki1 \not\equiv Ki1'} \wedge \overline{Ki2 \not\equiv Ki2'} \wedge \overline{Kim \not\equiv Kim'} \wedge$$
$$\overline{K11 \not\equiv Kj-1,1} \wedge \overline{K12 \not\equiv Kj-1,2} \wedge \ldots \overline{K1m \not\equiv Kj-1,m} \wedge Zj-1$$

für j = 3 ... p.

Der Phasenschieber 98 bewirkt für jedes Vergleicherausgangssignal K11 ... K1m eine Phasenverschiebung um 180° + 180°/m. Mit den so gewonnen m Schaltbefehlen bzw. Phasenschieberausgangssignalen P11 ... P1m können $2^m$ Sektoren kodiert werden.

Die erweiterte Flussführungsschaltung wird nach dem Prinzip der Verdoppelung realisiert. F2 ist die erste Erweiterungsstufe zur Grund-Flussführungsschaltung F1. Für die nächste Erweiterung wird ein zweites Polygon definiert mit einer zweiten Grund-Flussführungsschaltung (KW2, V2) und einer zweiten Erweiterungsschaltung (KW2′, V2′). Das zweite Polygon ist gegenüber dem ersten so gedreht, dass bei der Ueberlagerung der beiden Polygone ein neues drittes Polygon mit doppelt so vielen Seiten wie bei dem ersten bzw. zweiten Polygon entsteht.

Beispielsweise wird die Erweiterung einer 6kant-Bahn auf eine 12kant-Bahn mit Hilfe zweier phasenverschobener 6kant-Bahnen erreicht. Diese Erweiterungsmethode kann beliebig auf mehr als zwei Stufen angewandt werden. In der Praxis wird keine höhere Pulsigkeit als 12 oder 24 verlangt.

Anstelle eines r-seitigen Polygons (z.B. r = 6) wird beim modifizierten Verfahren für die Flusstrajektorie ein s-seitiges Polygon (z.B. s = 12) verwendet, mit s gleich $2^p$ • r, p ≧ 1, ganzzahlig. Das s-seitige Polygon besteht aus r geraden Segmenten alternie rend mit s - r Zickzack-Segmenten, die gegebenenfalls aus mehreren Segment-Gruppen bestehen. Solange sich der Flussvektor auf einem geraden Segment befindet, wird nur ein Peripherie-Vektor alternierend mit dem Nullvektor durchgeschaltet. Zickzack-Segmente werden so definiert, dass die Hüllkurve der Flusstrajektorie ein gerades Segment ist, das mittels Pulsspiel vom Nullvektor und von zwei angrenzenden alternierend angewählten Peripherie-Vektoren nachgefahren wird. Beispiele für modifizierte Flusstrajektorien mit Zickzack-Segmenten sind in den Fig. 16 und 17 für drei Phasen und zwei Stufen bzw. drei Phasen und drei Stufen angegeben. Fig. 16 zeigt eine 12kant-Bahn und Fig. 17 eine 24kant-Bahn.

Die orthogonalen Ständerstromkomponenten $i_\alpha$, $i_\beta$ und die orthogonalen Ständerspannungskomponenten $U_\alpha$, $U_\beta$ können, statt auf die in Verbindung mit Fig. 1 angegebene Weise, auch mittels der Steuersignale S1 - S3 und der erfassten Eingangsgleichspannung Ud nachgebildet werden. Dies hat den Vorteil, dass der Sternpuknt St nicht ausgeführt werden muss. Bei der Ausführung gemäss Fig. 19 können $i_\alpha$ und $i_\beta$ mit $i_{w1}$ und $i_{w3}$ als Messgrössen nachgebildet werden. $U_\alpha$ und $U_\beta$ können gemäss den folgenden Gleichungen nachgebildet werden:

$U_\alpha$ = Ud/3 (2 S1 - S2 - S3) und
$U_\beta$ = Ud/$\sqrt{3}$ (S2 - S3).

**Patentansprüche**

**1.** Verfahren zum Betrieb einer Drehfeldmaschine (33),

a) die über einen selbstgeführten Wechselrichter (30, Q1 ... Q1) gespeist wird,

b) wobei ein Steuervektor zur Vorgabe des Schaltzustandes des Wechselrichters, der den Flussvektor ($\psi$) in der Drehfeldmaschine abbildet, die Trajektorie des Flussvektors längs einer Kantenbahn (B) mit mindestens $2^P$ • q • m Kanten führt, wobei p eine ganze Zahl ≧ 1, q ≧ 2 die Anzahl Spannungsstufen (Q1 ... Q1) des Wechselrichters und m ≧ 2 die Phasenzahl der Drehfeldmaschine bedeuten,

dadurch gekennzeichnet,

c) dass der Flussvektor ($\psi$) der Drehfeldmaschine (33) längs der Kantenbahn (B) alternierend auf

geraden Segmenten (a) und Zickzack-Segmenten (b) geführt wird, wobei die Hüllkurve jedes Zickzack-Segmentes eine Kante der Kantenbahn bildet,

d) dass je Phase der Drehfeldmaschine (33) mindestens eine erste Phasen-Flusskomponente ($\psi_{\beta 1}$ - $\psi_{\beta 3}$; $\psi_{\beta 11}$ -$\psi_{\beta 1m}$, $\psi_{\beta 21}$ - $\psi_{\beta 2m}$) und

e) eine dazu um einen vorgebbaren Fluss-Verschiebungswinkel ($\phi$) phasenverschobene zweite Phasen-Flusskomponente ($\psi_{\beta 1'}$ - $\psi_{\beta 3'}$; $\psi_{\beta 11'}$ - $\psi_{\beta 1m'}$, $\psi_{\beta 21'}$ - $\psi_{\beta 2m'}$) erzeugt wird mit $\phi = 180°/(2^P \cdot m)$,

f) dass jede erste und zweite Phasen-Flusskomponente in einem Vergleicher (45, 56; V1, V1', V2, V2') auf Ueberschreiten eines vorgebbaren Flussgrenzwertes ($\psi_s$) überwacht wird,

g) dass alle von den ersten Phasen-Flusskomponenten erhaltenen Vergleicherausgangssignale (K1 - K3; K11 - K1m, K21 - K2m) um 180° + 180°/m in der Phase verschoben und

h) in Abhängigkeit von mindestens einem Zickzack-Signal (Z; Z2 - Zm) zur Steuerung des Wechselrichters (30) verwendet werden,

i) wobei das Zickzack-Signal in Abhängigkeit von Vergleicherausgangssignalen (K1 - K3; K11 - K1m, K21 - K2m; K1' - K3'; K11' - K1m', K21' - K2m') gebildet ist, die von den ersten und zweiten Phasen-Flusskomponenten abgeleitet sind gemäss den Beziehungen:

$$Z2 = \overline{K11 \ddagger K11'} \wedge \overline{K12 \ddagger K12'} \wedge \ldots \overline{K1m \ddagger K1m'},$$

$$Zj = \sum_{i=1}^{j-1} \overline{Ki1 \ddagger Ki1'} \wedge \overline{Ki2 \ddagger Ki2'} \wedge \overline{Kim \ddagger Kim'} \wedge \overline{K11 \ddagger Kj-1,1} \wedge \overline{K12 \ddagger Kj-1},2 \wedge \ldots \overline{K1m \ddagger Kj-1,m} \wedge Zj-1$$

für j = 3 ... p.

2. Verfahren nach Anspruch 1, dadurch gekennzeichnet, dass der Flussvektor ($\psi$) im Bereich eines geraden Kantenbahnsegments (a) in Abhängigkeit von einer vorgebbaren Spannung (UI) und im Bereich eines Zickzack-Segments (b) alternierend in Abhängigkeit von zwei verschiedenen, vorgebbaren Spannungen (US, UII) erzeugt wird.

3. Einrichtung zum Betrieb einer Drehfeldmaschine (33) über einen selbstgeführten Wechselrichter (30, Q1 - Q1),

a) die eine Flussführungsschaltung zur Regelung des Wechselrichters aufweist,

b) wobei die Flussführungsschaltung einen ersten Vergleicher (46, V1) zum Vergleich von m ersten Flussistwertkomponenten ($\psi_{\beta 1}$ - $\psi_{\beta 3}$; $\psi_{\beta 11}$ - $\psi_{\beta 1m}$) der Drehfeldmaschine (33) mit mindestens einem Flussollwert ($\psi_s$) aufweist, m = Anzahl der Phasen, an dem ausgangsseitig m erste Vergleicherausgangssignale (K11 - K13) abgreifbar sind, -

c) welcher Vergleicher über einen Signalumwandler (36), an dem ausgangsseitig Wechselrichter-Steuersignale (SW1 - SW3) abgreifbar sind, mit dem Wechselrichter (30) in Steuerverbindung steht, dadurch gekennzeichnet,

d) dass der erste Vergleicher (46, V1) ausgangsseitig einerseits über eine Phasenschiebereinrichtung (47, 98) mit einer Auswahlschaltung (48, 99) für eine Phasenverschiebung von 180° + 180°/m und

e) andererseits über mindestens eine Logikschaltung (Y, Y21 - Yp-1) mit dieser Auswahlschaltung in Steuerverbindung steht,

f) dass die Auswahlschaltung ausgangsseitig mit dem Signalumwandler (36) in Wirkverbindung steht,

g) dass mindestens ein zweiter Koordinatenwandler (56, KW1, KW2, KW2') vorgesehen ist, der zu diesen m ersten Flussistwertkomponenten ($\psi_{\beta 1}$ - $\psi_{\beta 3}$; $\psi_{\beta 11}$ - $\psi_{\beta 1m}$) um einen vorgebbaren Winkel ($\phi$) phasenverschobene m zweite Flussistwertkomponenten ($\psi_{\beta 1'}$ - $\psi_{\beta 3'}$; $\psi_{\beta 11'}$ - $\psi_{\beta 1m'}$, $\psi_{\beta 2m}$ - $\psi_{\beta 2m'}$) an mindestens einen Zweiten Vergleicher (57, V1', V2') liefert, der diese zweiten Flussistwertkomponenten mit dem mindestens einen Flussollwert ($\psi_s$) vergleicht,

h) dass aus diesem Zweiten Vergleicher hervorgehende m zweite Vergleicherausgangssignale (K11' - K1m', K21' - K2m') der mindestens einen Logikschaltung zugeführt sind,

i) dass die Logikschaltung Elemente (63 - 73) für eine logische Verknüpfung der ersten und zweiten

Vergleicherausgangssignale gemäss folgender Beziehung aufweist:

$$Z2 = \overline{K11 \ddagger K11'} \wedge \overline{K12 \ddagger K12'} \wedge \ldots \overline{K1m \ddagger K1m'},$$

$$Zj = \sum_{i=1}^{j-1} \overline{Ki1 \ddagger Ki1'} \wedge \overline{Ki2 \ddagger Ki2'} \wedge \overline{Kim \ddagger Kim'} \wedge \overline{K11 \ddagger Kj-1,1} \wedge \overline{K12 \ddagger Kj-1,2} \wedge \ldots \overline{K1m \ddagger Kj-1,m} \wedge Zj-1$$

für j = 3 ... p.

**4.** Einrichtung nach Anspruch 3, dadurch gekennzeichnet,
a) dass mindestens ein erster Koordinatenwandler (45, KW1) vorgesehen ist, der ausgangsseitig mit dem ersten Vergleicher (46, V1) in Wirkverbindung steht und
b) dass den ersten und zweiten Koordinatenwandlern (45, KW1; 65, KW1', KW2, KW2') eingangsseitig orthogonale Flusskomponenten ($\psi_\alpha$, $\psi_\beta$) zugeführt sind, wobei die ersten und zweiten Koordinatenwandler die orthogonalen Flusskomponenten in m Phasen-Flusskomponenten mit gleichem Phasenabstand (360°/m) umwandeln.

**5.** Einrichtung nach Anspruch 4, dadurch gekennzeichnet, dass die zweiten Flussistwertkomponenten ($\psi_{\beta 1'}$ - $\psi_{\beta 3'}$) gegenüber der ersten Flussistwertkomponente ($\psi_{\beta 1}$ - $\psi_{\beta 3}$) um 180°/(m • $2^P$) in der Phase verschoben sind, m = Anzahl der Phasen, p ≧ 1, ganzzahlig.

**6.** Einrichtung nach Anspruch 4 oder 5, dadurch gekennzeichnet,
a) dass die Auswahlschaltung (48, 99) je Phase (m) ein UND-Glied (65 - 67) mit nichtinvertierten Eingängen und ein UND-Glied (68 - 70) mit invertierten Eingängen aufweist, die eingangsseitig über erste Eingänge mit einem der jeweiligen Phase entsprechenden Phasenausgang (P1, P3, P11 - P1m) der Phasenschiebereinrichtung (47, 99) und ausgangsseitig mit einem der jeweiligen Phase zugeordneten ODER-Glied (71 - 73) in Wirkverbindung stehen, und
b) dass ein ODER-Glied (64) vorgesehen ist, dem eingangsseitig über einen Binärzähler (63) eine Drehmoment-Schaltvariable (SM), ferner ein Zickzack-Signal (Z2) und ein Freigabesignal (F) zugeführt sind und das ausgangsseitig mit zweiten Eingängen der UND-Glieder mit nichtnegierten Eingängen und der UND-Glieder mit negierten Eingängen in Wirkverbindung steht.

**7.** Einrichtung nach einem der Ansprüche 3 bis 6, dadurch gekennzeichnet, dass mehrere erste und 2. Flussführungsschaltungen (KW1, V1, KW1' - V1'; KW2, V2, KW2', V2') gruppenweise logisch verknüpft sind, wobei die einzelnen Gruppen relativ zueinander in der Phase verschoben sind.

## Claims

**1.** A method for operating an induction machine (33),
a) which is fed via a self-controlled inverter (30, Q1 ... Q2), b) a control vector for predetermining the switching state of the inverter which images the flux vector ($\psi'$) in the induction machine, conducting the trajectory of the flux vector along an edge path (B) having at least $2^p$ . q . m edges, where p is an integral number ≧ 1, q ≧ 2 is the number of voltage stages (Q1 ... Q1) of the inverter and m ≧ 2 is the number of phases of the induction machine, characterised in that
c) the flux vector ($\psi$) of the induction machine (33) is alternatingly conducted on straight segments (a) and zig-zag segments (b) along the edge path (B), the envelope curve of each zig-zag segment forming an edge of the edge path,
d) for each phase of the induction machine (33), at least one first flux component ($\psi_{\beta 1}$ - $\psi_{\beta 3}$; $\psi_{\beta 11}$ - $\psi_{\beta 1m}$, $\psi_{\beta 21}$ - $\psi_{\beta 2m}$) and
e) a second phase flux component, which is phase shifted with respect to the said first phase flux component by a predeterminable flux shift angle ($\psi$), ($\psi_{\beta 1'}$ - $\psi_{\beta 3'}$; $\psi_{\beta 11'}$ - $\psi_{\beta 1m'}$, $\psi_{\beta 21'}$ - $\psi_{\beta 2m'}$) is

generated, where $\psi = 180°/(2^p \cdot m)$,
f) each first and second phase flux component is monitored in a comparator (45, 56, VI, VI', V2, V2') for exceeding of a predeterminable flux limit value ($\psi_s$),
g) all comparator output signals (K1 - K3; K11 - K1m, K21 - k2m) obtained from the first phase flux components are shifted in phase by 180° + 180°/m and
h) are used, in dependence on at least one zig-zag signal (Z; Z2 - Zm) for controlling the inverter (30),
i) the zig-zag signal being formed in dependence on comparator output signals (K1 - K3; K11 - K1m, K21 - K2m; K1' - K3'; K11' - K1m', K21' - K2m) which are derived from the first and second phase flux components in accordance with the relations;

$$Z2 = \overline{K11 \not\equiv K11'} \wedge \overline{K12 \not\equiv K12'} \wedge \ldots \overline{K1m \not\equiv K1m'},$$

$$Zj = \sum_{i=1}^{j-1} \overline{Ki1 \not\equiv Ki1'} \wedge \overline{Ki2 \not\equiv Ki2'} \wedge \overline{Kim \not\equiv Kim'} \wedge \overline{K11 \not\equiv Kj\text{-}1,1} \wedge \overline{K12 \not\equiv Kj\text{-}1,2} \wedge \ldots \overline{K1m \not\equiv Kj\text{-}1,m} \wedge Zj\text{-}1$$

for j = 3 ... p.

**2.** A method according to Claim 1, characterised in that the flux vector ($\psi$) is generated in dependence on a predeterminable voltage (UI) in the area of a straight edge path segment (a) and alternatingly in dependence on two different predeterminable voltages (UI, UII) in the area of a zig-zag segment (b).

**3.** A device for operating an induction machine (33) via a self-commutated inverter (30, Q1 - Q1),
a) which exhibits a flux conducting circuit for controlling the inverter,
b) the flux conducting circuit exhibiting a first comparator (46, V1) for comparing m first actual flux value components ($\psi_{\beta 1}$ - $\psi_{\beta 3}$; $\psi_{\beta 11}$ - $\psi_{\beta 1m}$) of the induction machine (33) with at least one nominal flux value ($\psi_s$),m = the number of phases, on the out put side of which m first comparator output signals (K11 - K13) can be picked up,
c) said comparator being control-connected to the inverter (30) via a signal converter (36) on the output side of which inverter control signals (SW1 - SW3) can be picked up, characterised in that
d) the output of the first comparator (46, V1) is control-connected, on the one hand, via a phase shifter device (47, 98) to a selection circuit (48, 99) for a phase shift of 180° + 180°/m and
e) on the other hand, via at least one logic circuit (Y, Y21 - Yp-1) to this selection circuit,
f) the output of the selection circuit is effectively connected to the signal converter (36),
g) at least one second coordinate converter (56, KW1, KW2, KW2') is provided which supplies m second actual flux value components ($\psi_{\beta 1'}$ - $\psi_{\beta 3'}$; $\psi_{\beta 11'}$ - $\psi_{\beta 1m'}$, $\psi_{\beta 2m}$ - $\psi_{\beta 2m'}$), which are phase shifted by a predeterminable angle ($\psi$) with respect to these m first actual flux value components ($\psi_{\beta 1}$ - $\psi_{\beta 3}$; $\psi_{\beta 11}$ - $\psi_{\beta 1m}$), to at least one second comparator (57, V1', V2') which compares these second actual flux value components with the at least one nominal flux value ($\psi_s$),
h) m second comparator output signals (K11' - K1m', K21' - K2m') produced by this second comparator are supplied to the at least one logic circuit,
i) the logic circuit exhibits elements (63 - 73) for logically combining the first and second comparator output signals in accordance with the following relation:

$$Z2 = \overline{K11 \not\equiv K11'} \wedge \overline{K12 \not\equiv K12'} \wedge \ldots \overline{K1m \not\equiv K1m'},$$

$$Zj = \sum_{i=1}^{j-1} \overline{Ki1 \not\equiv Ki1'} \wedge \overline{Ki2 \not\equiv Ki2'} \wedge \overline{Kim \not\equiv Kim'} \wedge \overline{K11 \not\equiv Kj\text{-}1,1} \wedge \overline{K12 \not\equiv Kj\text{-}1,2} \wedge \ldots \overline{K1m \not\equiv Kj\text{-}1,m} \wedge Zj\text{-}1$$

for j = 3 ... p.

**4.** A device according to Claim 3, characterised in that

a) at least one first coordinate converter (45, KW1) is provided, the output of which is effectively connected to the first comparator (46, V1) and

b) the inputs of the first and second coordinate converters (45, KW1; 65, KW1', KW2, KW2') are supplied with orthogonal flux components ($\psi_\alpha$, $\psi_\beta$), the first and second coordinate converters converting the orthogonal flux components into m phase flux components having an equal phase interval (360°/m).

**5.** A device according to Claim 4, characterised in that the second actual flux value components ($\psi_{\beta 1'}$ - $\psi_{\beta 3'}$) are shifted in by 180°/(m . $2^p$) in phase with respect to the first actual flux component value ($\psi_{\beta 1}$ - $\psi_{\beta 3}$), m = number of phases, p ≧ 1, integral.

**6.** A device according to Claim 4 or 5, characterised in that

a) the selection circuit (48, 99) exhibits for each phase (m) an AND gate (65 - 67) having non-inverted inputs and an AND gate (68 - 70) having inverted inputs, the inputs of which are effectively connected via first inputs to a phase output (P1, P3, P11 - P1m), corresponding to the respective phase, of the phase shifter device (47, 98) and the outputs of which are effectively connected to an OR gate (71, 73) which is associated with the respective phase, and

b) an OR gate (64) is provided, the input of which is supplied with a torque switching variable ($S_m$) via a binary counter (63), also a zig-zag signal (Z2) and an enable signal (F) and the output of which is effectively connected to second inputs of the AND gates having non-negating inputs and of the AND gates having negating inputs.

**7.** A device according to one of Claims 3 to 6, characterised in that several first and second flux conducting circuits (KW1, V1, KW1' - V1'; KW2, V2, KW2', V2') are logically combined in groups, the individual groups being shifted in phase relative to one another.

**Revendications**

**1.** Procédé pour la mise en oeuvre d'une machine à champ tournant (33),

a) qui est alimentée par l'intermédiaire d'un onduleur à commutation automatique (30, Q1, ..., Q1),

b) suivant lequel un vecteur de commande pour la définition de l'état de commutation de l'onduleur, qui représente le vecteur de flux ($\psi$) dans la machine à champ tournant, fait passer la trajectoire du vecteur de flux suivant un polygone (B) à au moins $2^p$ . q . m côtés, où p est un nombre entier ≧ 1, q ≧ 2 est le nombre de positions de tension (Q1, ..., Q1) de l'onduleur et m ≧ 2 est le nombre de phases de la machine à champ tournant,

caractérisé en ce que :

c) le vecteur de flux ($\psi$) de la machine à champ tournant (33) est guidé suivant le polygone (B), en alternance sur des segments rectilignes (a) et des segments en zigzag (b), l'enveloppante de chaque segment en zigzag formant un côté du polygone;

d) à chaque phase de la machine à champ tournant sont produites au moins une première composante de flux de phase ($\psi_{\beta 1}$ - $\psi_{\beta 3}$; $\psi_{\beta 11}$ - $\psi_{\beta 1m}$; $\psi_{\beta 21}$ - $\psi_{\beta 2m}$), et

e) une deuxième composante de flux de phase ($\psi_{\beta 1'}$ - $\psi_{\beta 3'}$; $\psi_{\beta 11'}$ - $\psi\beta_{1m}$; $\psi_{\beta 21'}$ - $\psi_{\beta 2m'}$) déphasée par rapport à la première d'un angle de déphasage de flux ($\phi$) prédéfini, où $\phi$ = 180°/($2^p$ . m);

f) chaque première et deuxième composante de flux de phase est surveillée pour détecter le dépassement d'une valeur limite de flux prédéfinie ($\psi_s$), dans un comparateur (45, 56; V1, V1', V2, V2');

g) tous les signaux de sortie de comparateur obtenus à partir des premières composantes de flux de phase (K1 à K3; K11 à K1m, K21 à K2m) sont déphasés de 180° + 180°/m, et

h) sont utilisés en fonction d'au moins un signal en zigzag (Z; Z2 à Zm) pour la commande de l'onduleur (30);

i) le signal en zigzag étant formé en fonction de signaux de sortie de comparateur (K1 à K3; K11 à K1m, K21 à K2m; K1' à K3'; K11' à K1m', K21' à K2m') qui sont dérivés des premières et deuxièmes composantes de flux de phase suivant les équations :

$$Z2 = \overline{K11 \not\equiv K11'} \wedge \overline{K12 \not\equiv K12'} \wedge, \ldots, \overline{K1m \not\equiv K1m'}$$

$$Zj = \sum_{i=1}^{j-1} \overline{Ki1 \not\equiv Ki1'} \wedge \overline{Ki2 \not\equiv Ki2'} \wedge \overline{Kim \not\equiv Kim'} \wedge$$

$$\overline{K11 \not\equiv Kj-1,1} \wedge \overline{K12 \not\equiv Kj-1,2} \wedge, \ldots, \overline{K1m \not\equiv Kj-1,m} \wedge Zj-1$$

pour j = 3, ..., p.

**2.** Procédé suivant la revendication 1, caractérisé en ce que le vecteur de flux ($\psi$) est produit dans le domaine d'un segment de trajectoire rectiligne (a), en fonction d'une tension (UI) prédéfinie et dans le domaine d'un segment en zigzag (b) alternant, en fonction de deux tensions prédéfinies (UI, UII).

**3.** Dispositif pour la mise en oeuvre d'une machine à champ tournant (33) par l'intermédiaire d'un onduleur à commutation automatique (30, Q1 à Q1),

a) qui comporte un circuit de commande de flux pour la régulation de l'onduleur;

b) le circuit de commande de flux comportant un premier comparateur (46, V1) pour comparer m premières composantes de valeurs instantanées de flux ($\psi_{\beta 1}$ à $\psi_{\beta 3}$; $\psi_{\beta 11}$ à $\psi_{\beta 1m}$) de la machine à champ tournant (33) avec au moins une valeur de consigne de flux ($\psi_s$), m étant le nombre de phases auxquelles m premiers signaux de sortie de comparateur (K11 à K13) sont disponibles à la sortie,

c) le comparateur étant connecté en liaison de commande à l'onduleur 30, par l'intermédiaire d'un convertisseur de signal (36), à la sortie duquel des signaux de commande d'onduleur (SW1 à SW3) sont disponibles,

caractérisé en ce que :

d) le premier comparateur (46, V1) est en liaison de commande, par sa sortie, d'une part, par l'intermédiaire d'un dispositif déphaseur (47, 98) avec un circuit sélecteur (48, 99) pour un déphasage de 180° + 180°/m, et

e) d'autre part, par l'intermédiaire d'au moins un circuit logique (Y, Y21 à Yp-1), avec ce circuit sélecteur,

f) le circuit sélecteur est en liaison active par sa sortie avec le convertisseur de signal (36),

g) au moins un deuxième transformateur de coordonnées (56, KW1, KW2, KW2') est prévu et fournit m deuxièmes composantes de valeurs instantanées de flux ($\psi_{\beta 1}'$ à $\psi_{\beta 3}'$; $\psi_{\beta 11}'$ à $\psi_{\beta 1m}'$; $\psi_{\beta 2m}$ à $\psi_{\beta 2m}'$) qui sont déphasées d'un angle ($\phi$) prédéfini par rapport à ces m premières composantes de valeurs instantanées de flux ($\psi_{\beta 1}$ à $\psi_{\beta 3}$; $\psi_{\beta 11}$ à $\psi_{\beta 1m}$) à au moins un deuxième comparateur (57, V1', V2') qui compare ces deuxièmes composantes de valeurs instantanées de flux à au moins une valeur de consigne de flux ($\psi_s$),

h) les m deuxièmes signaux de sortie de comparateur (K11' à K1m', K21' à K2m') provenant de ce deuxième comparateur sont appliqués à au moins un circuit logique, et

i) le circuit logique comporte des éléments (63 à 73) servant à la combinaison logique des premiers et deuxièmes signaux de sortie de comparateur conformément aux équations ci-après :

$$Z2 = \overline{K11 \not\equiv K11'} \wedge \overline{K12 \not\equiv K12'} \wedge, \ldots, \overline{K1m \not\equiv K1m'}$$

$$Zj = \sum_{i=1}^{j-1} \overline{Ki1 \not\equiv Ki1'} \wedge \overline{Ki2 \not\equiv Ki2'} \wedge \overline{Kim \not\equiv Kim'} \wedge$$

$$\overline{K11 \not\equiv Kj-1,1} \wedge \overline{K12 \not\equiv Kj-1,2} \wedge, \ldots, \overline{K1m \not\equiv Kj-1,m} \wedge Zj-1$$

pour j = 3, ..., p.

**4.** Dispositif suivant la revendication 3, caractérisé en ce que :

a) au moins un premier transformateur de coordonnées (45, KW1) est prévu qui est en liaison active, par sa sortie, avec le premier comparateur (46, V1), et

b) le premier et le deuxième transformateur de coordonnées (45, KW1; 65, KW1', KW2, KW2') reçoivent à leur entrée des composantes de flux orthogonales ($\psi_\alpha$, $\psi_\beta$) et le premier et le deuxième transformateur de coordonnées transforment les composantes de flux orthogonales en m composantes de flux de phase présentant le même écartement de phases (360°/m).

**5.** Dispositif suivant la revendication 4, caractérisé en ce que les deuxièmes composantes de valeurs instantanées de flux ($\psi_{\beta 1'}$ à $\psi_{\beta 3'}$) sont déphasées par rapport aux premières composantes de valeurs instantanées de flux ($\psi_{\beta 1}$ à $\psi_{\beta 3}$) de 180°/(m . $2^p$), m étant le nombre de phases, p ≧ 1, entier.

**6.** Dispositif suivant la revendication 4 ou 5, caractérisé en ce que :

a) le circuit sélecteur (48, 99) présente, pour chaque phase (m), un circuit-porte ET (65 à 67) à entrées non inverseuses et un circuit-porte ET (68 à 70) à entrées inverseuses qui sont en liaison active, du côté de l'entrée, par l'intermédiaire de premières entrées avec une sortie de phase correspondant à la phase en question (P1, P3, P11 à P1m) du dispositif déphaseur (47, 98) et, du côté de la sortie, avec un circuit-porte OU (71 à 73) associé à la phase en question, et

b) un circuit-porte OU (64) est prévu qui, du côté de l'entrée, reçoit, par l'intermédiaire d'un compteur binaire (63), une variable de commutation de moment de rotation ($S_m$), ainsi qu'un signal en zigzag (Z2) et un signal de libération (F) et qui, du côté de la sortie, est en liaison active avec des deuxièmes entrées des circuits-portes ET à entrées non inverseuses et des circuits-portes ET à entrées inverseuses.

**7.** Dispositif suivant l'une quelconque des revendications 3 à 6, caractérisé en ce que plusieurs premiers et deuxièmes circuits de commande de flux (KW1, V1, KW1' à V1'; KW2, V2, KW2', V2') sont soumis par groupes à une combinaison logique, les groupes individuels étant mutuellement déphasés.

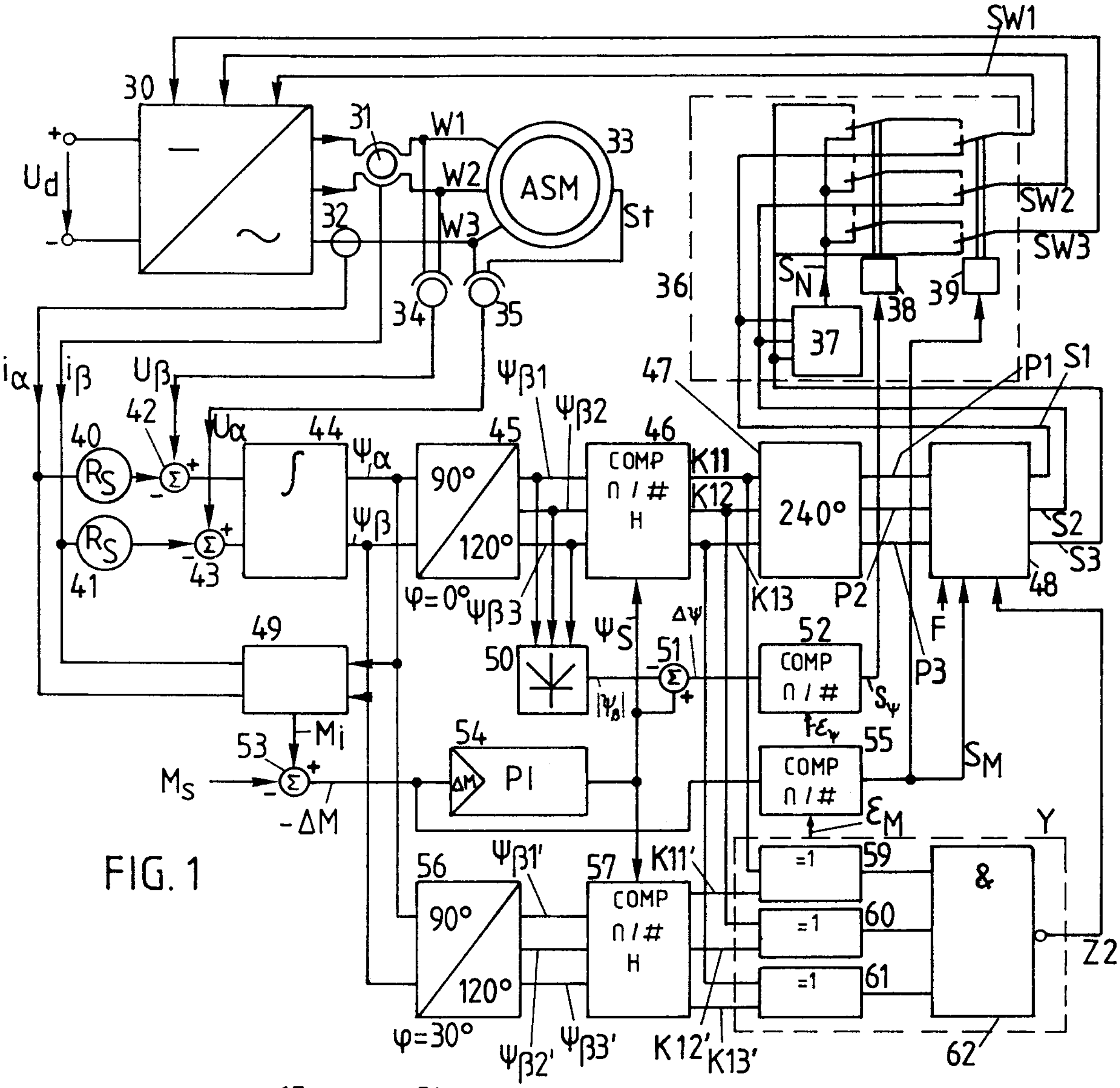


FIG. 1

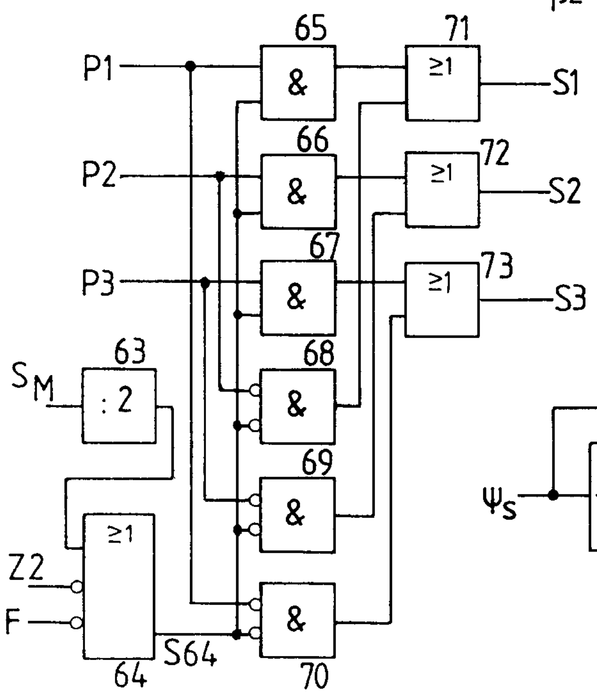


FIG. 2

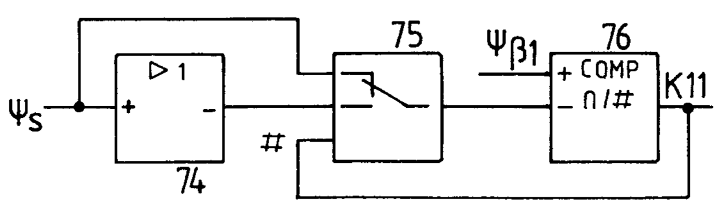


FIG. 3

FIG. 4

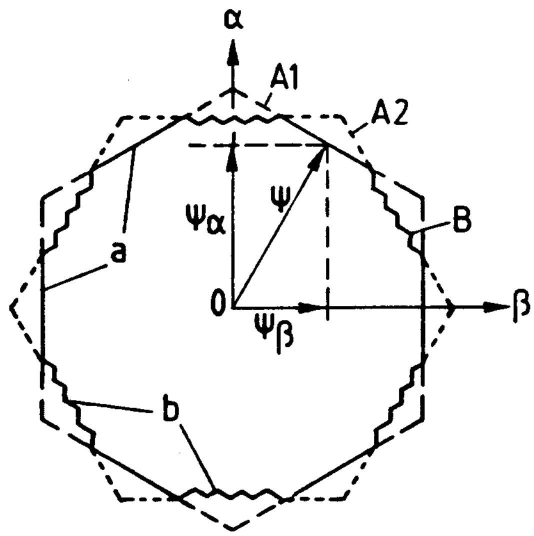


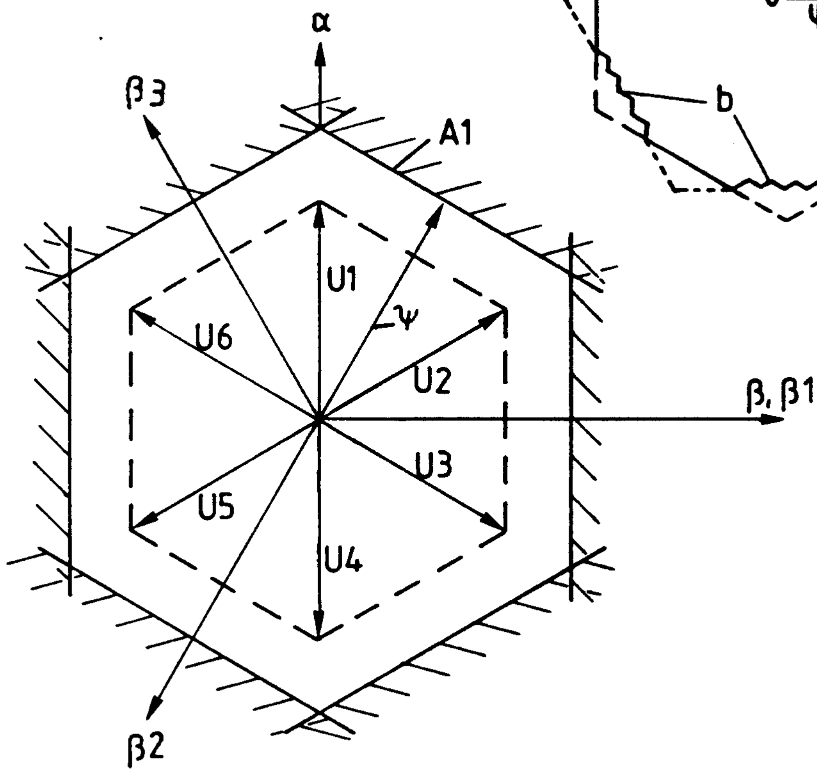


FIG. 5

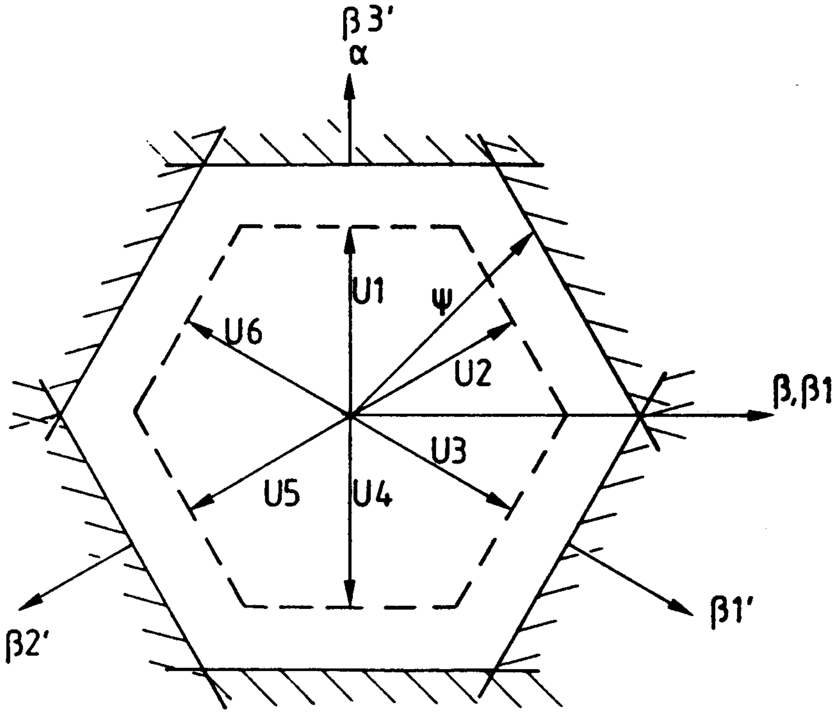


FIG. 6

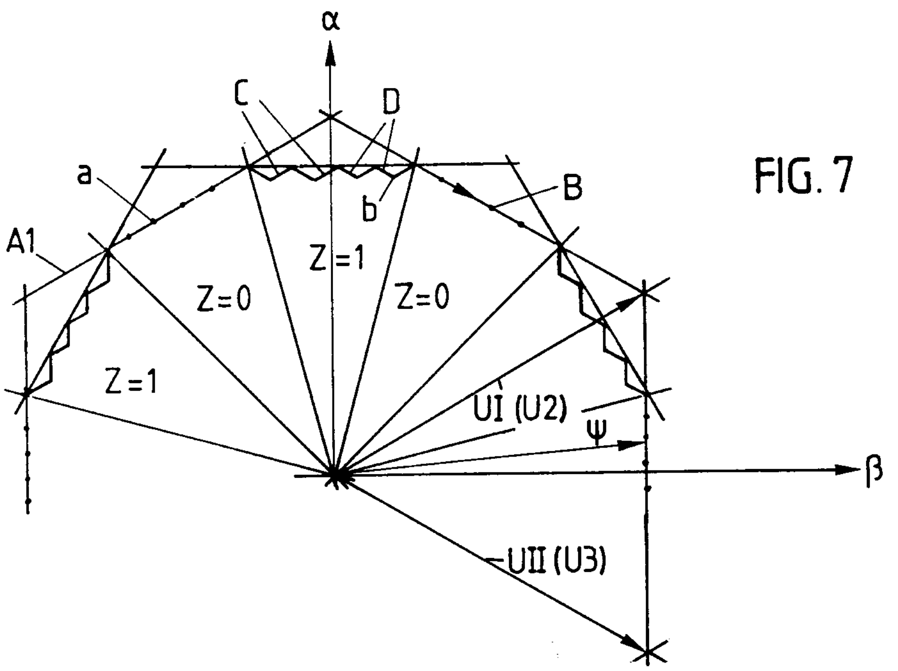


FIG. 7

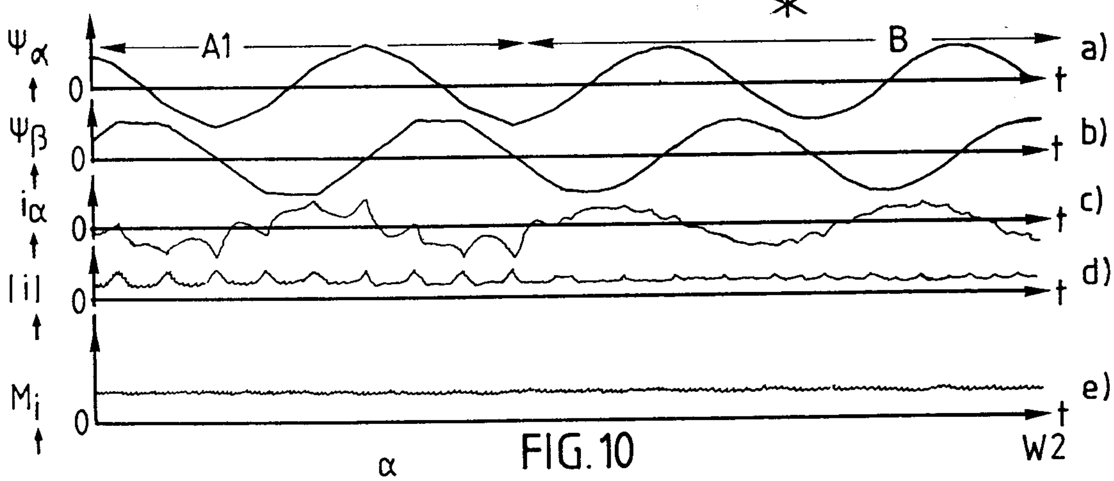


FIG. 10

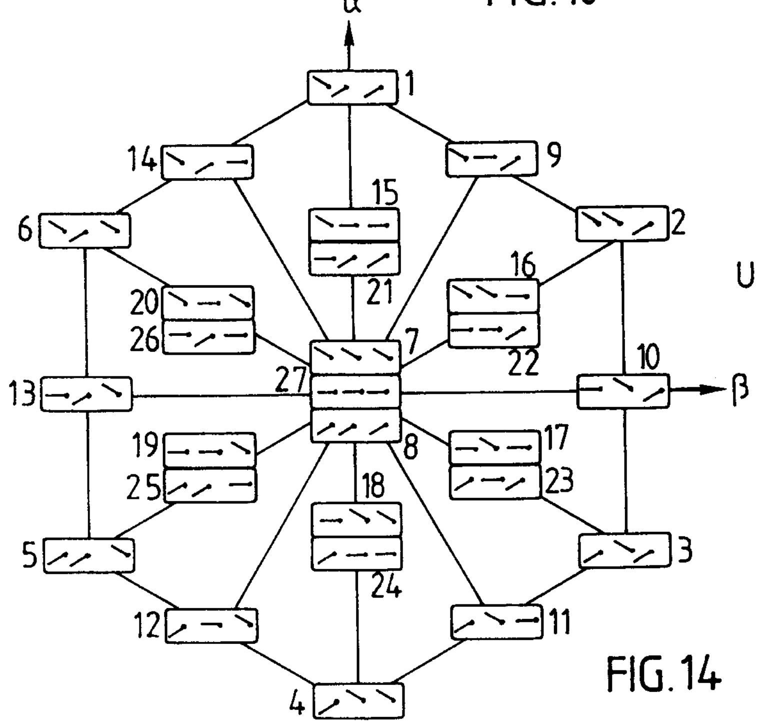


FIG. 14

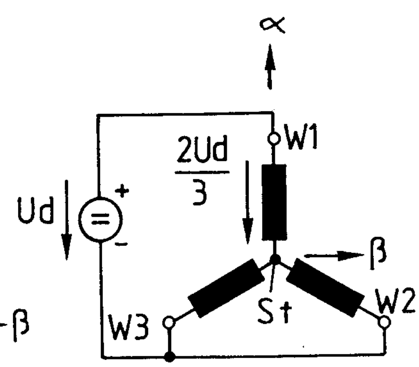


FIG. 15

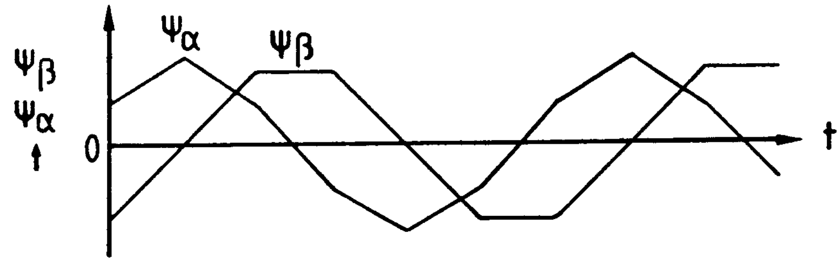


FIG. 8a

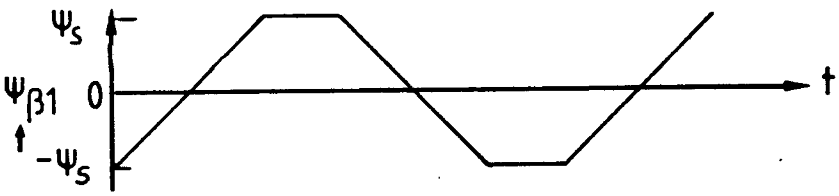


FIG. 8b

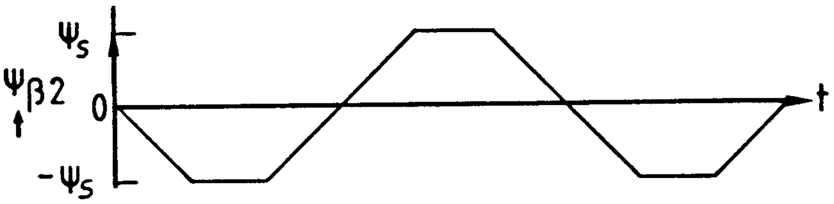


FIG. 8c

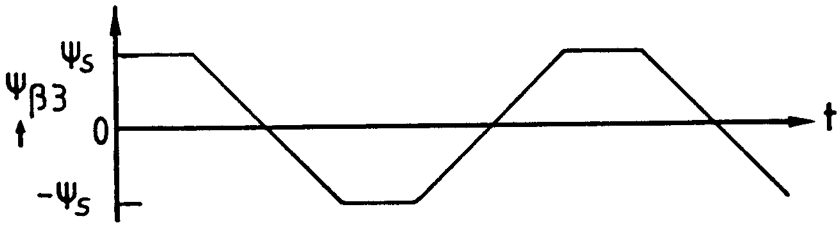


FIG. 8d

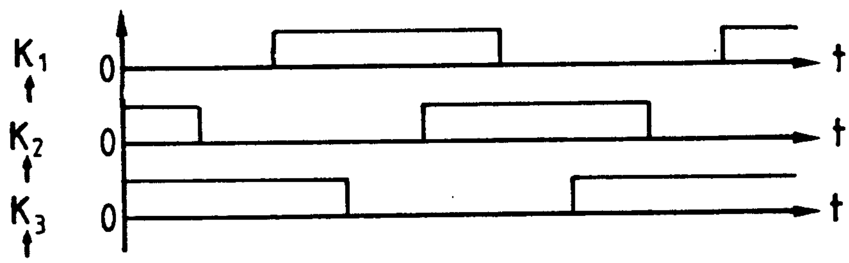


FIG. 8e

FIG. 8f

FIG. 8g

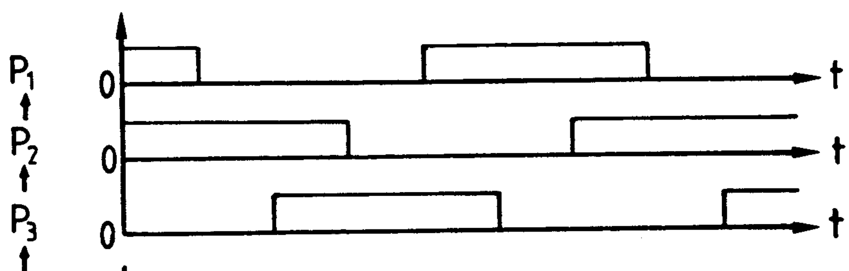


FIG. 8h

FIG. 8i

FIG. 8j

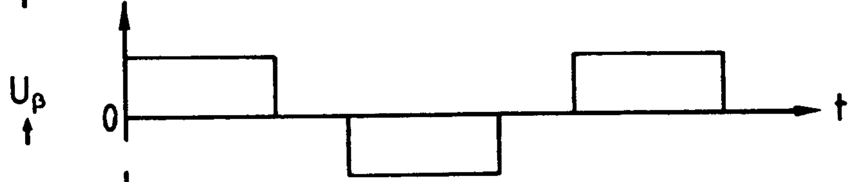


FIG. 8k

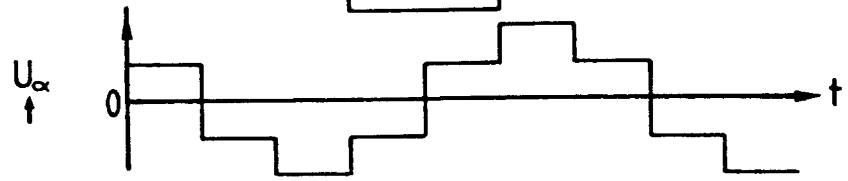


FIG. 8l

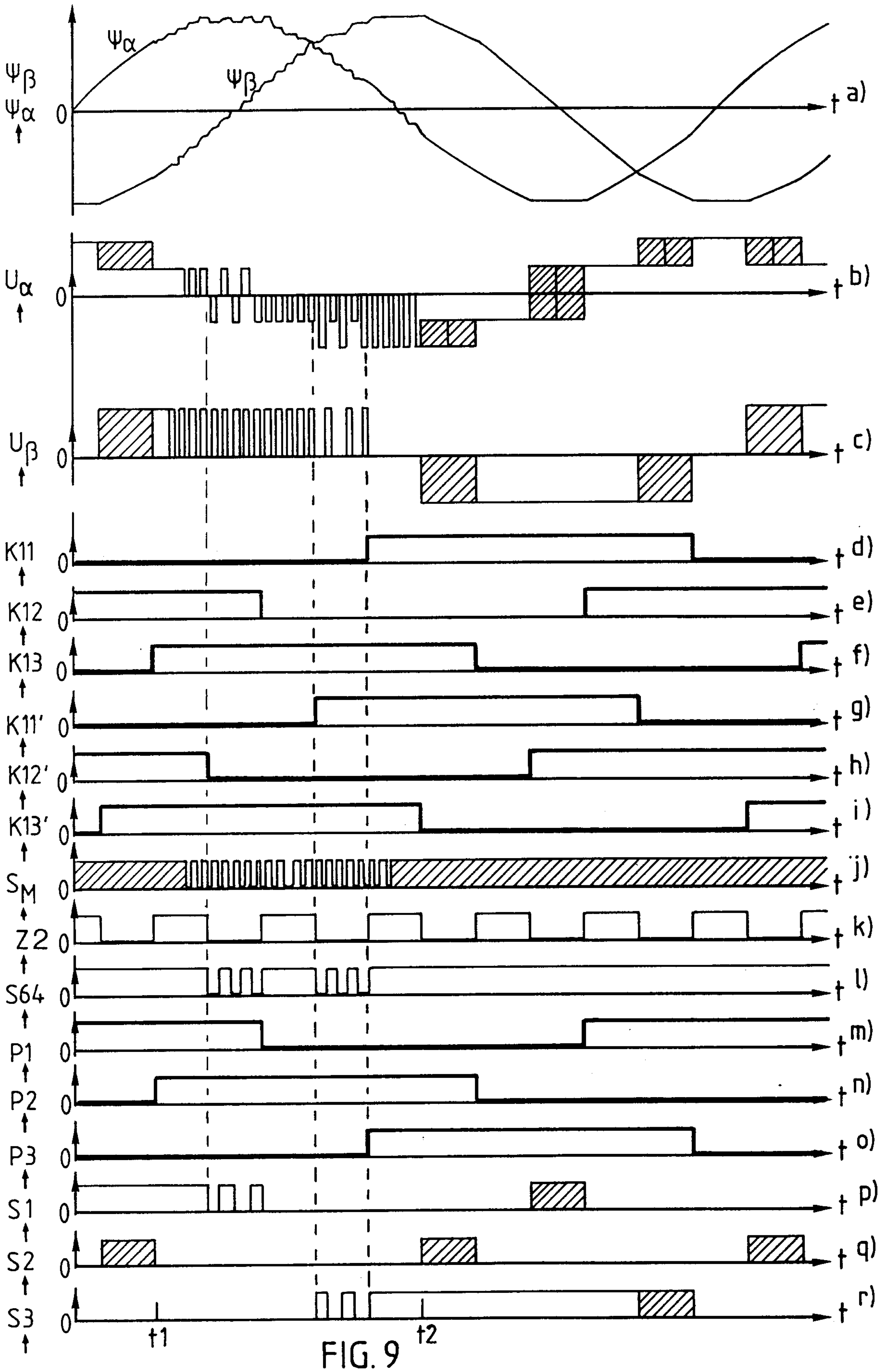
Ψα
Ψβ
Ψβ
Ψα
0
t
a)
Uα
0
t
b)
Uβ
0
t
c)
K11
0
t
d)
K12
0
t
e)
K13
0
t
f)
K11'
0
t
g)
K12'
0
t
h)
K13'
0
t
i)
SM
0
t
j)
Z2
0
t
k)
S64
0
t
l)
P1
0
t
m)
P2
0
t
n)
P3
0
t
o)
S1
0
t
p)
S2
0
t
q)
S3
0
t
r)
t1
t2

FIG. 9

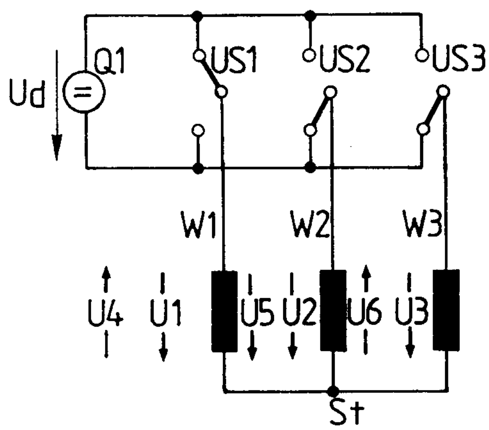


FIG. 11

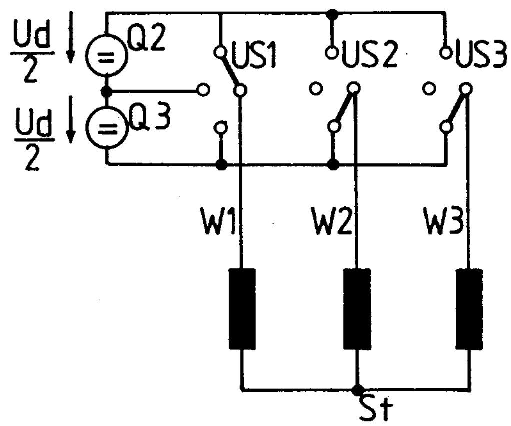


FIG. 12

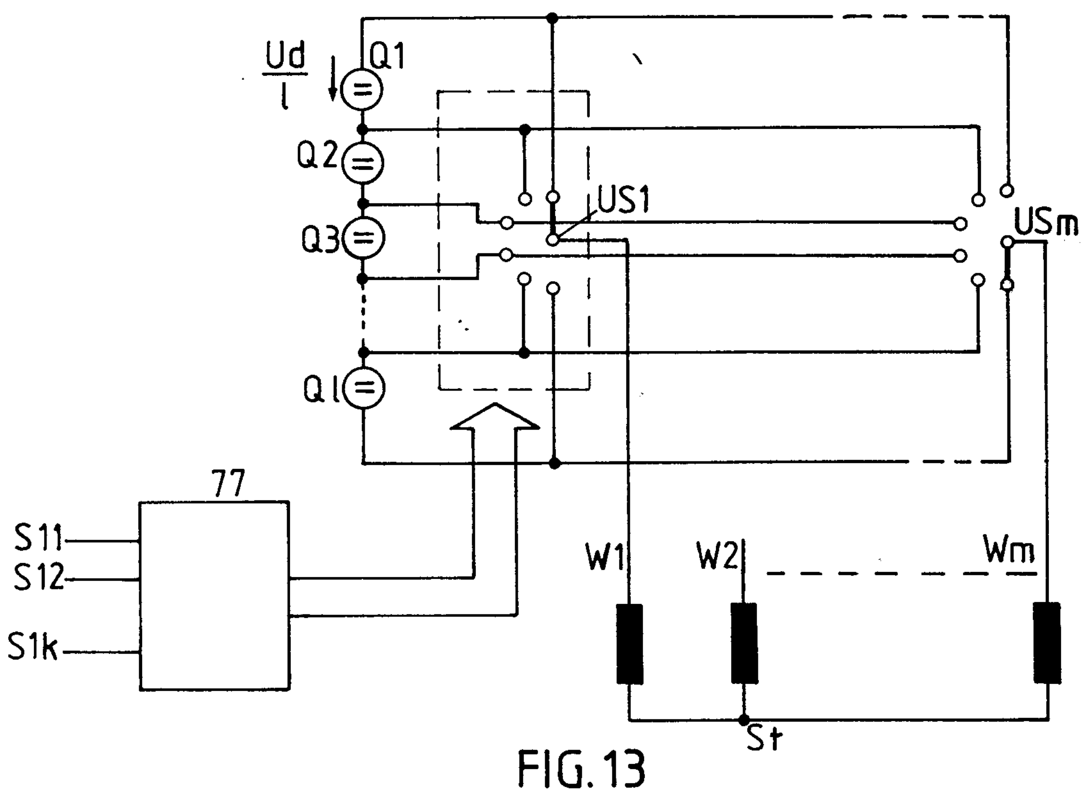


FIG. 13

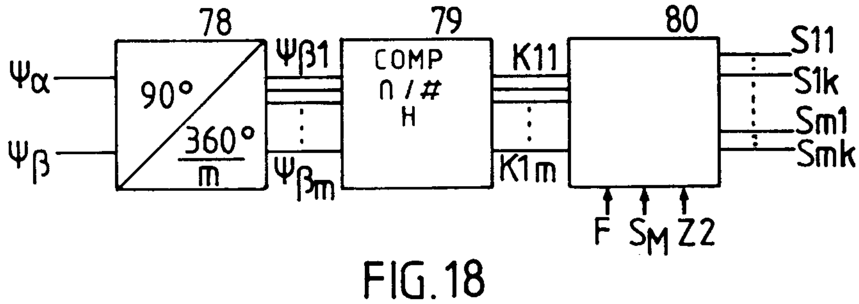


FIG. 18

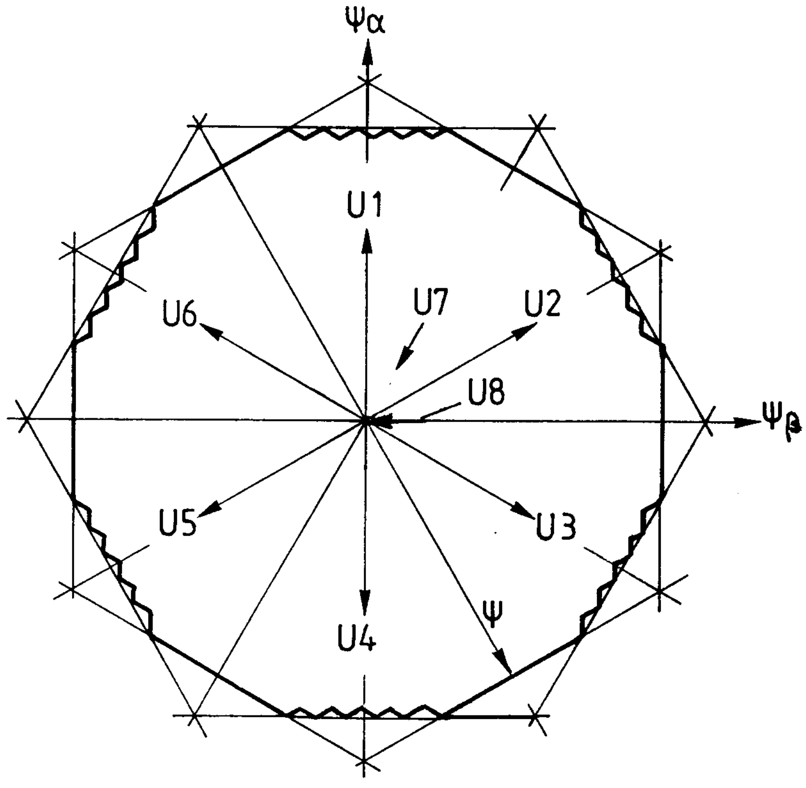
Ψα
Ψβ
U1
U2
U3
U4
U5
U6
U7
U8
Ψ

FIG. 16

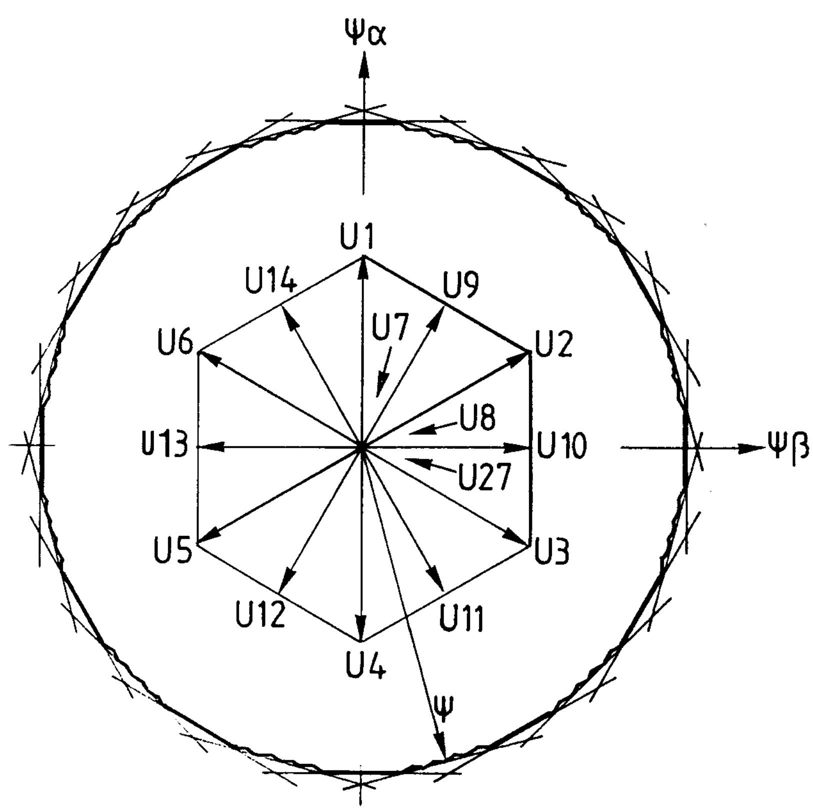
Ψα
Ψβ
U1
U14
U9
U7
U6
U2
U8
U13
U10
U27
U5
U3
U12
U11
U4
Ψ

FIG. 17

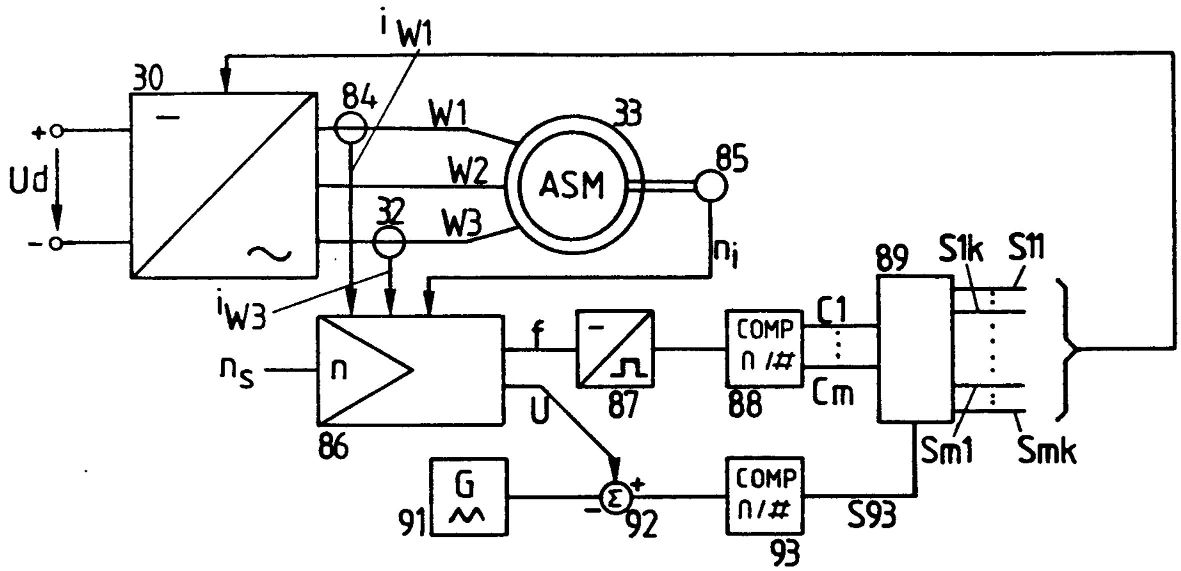

30
84
33
85
32
W1
W2
W3
ASM
Ud
iW1
iW3
ni
ns
n
86
f
U
87
88
89
COMP
C1
Cm
S1k
S11
Sm1
Smk
G
91
92
93
S93


FIG. 19

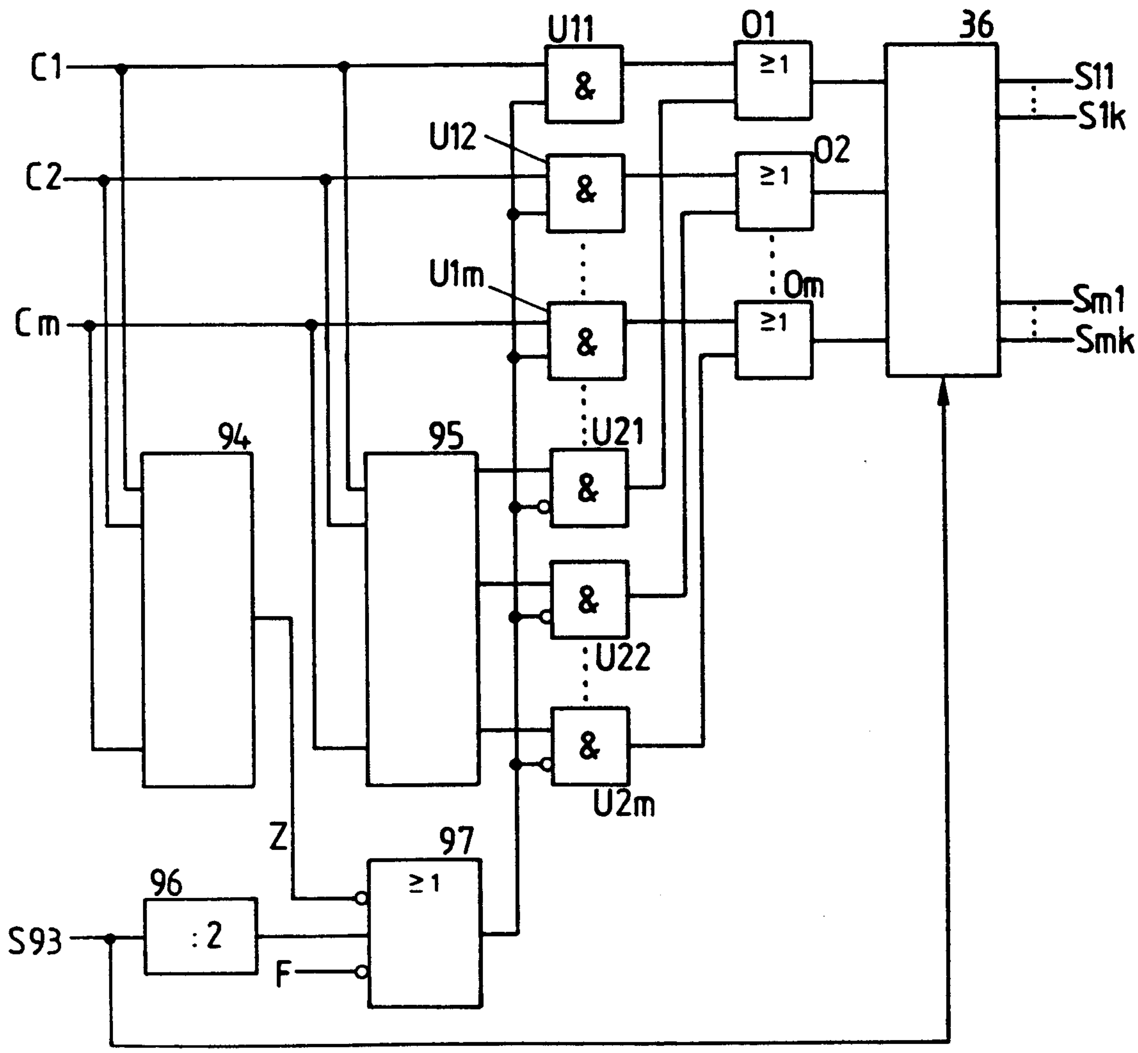

C1
C2
Cm
U11
U12
U1m
U21
U22
U2m
O1
O2
Om
36
S11
S1k
Sm1
Smk
94
95
96
97
: 2
≥ 1
&
Z
F
S93


FIG. 20

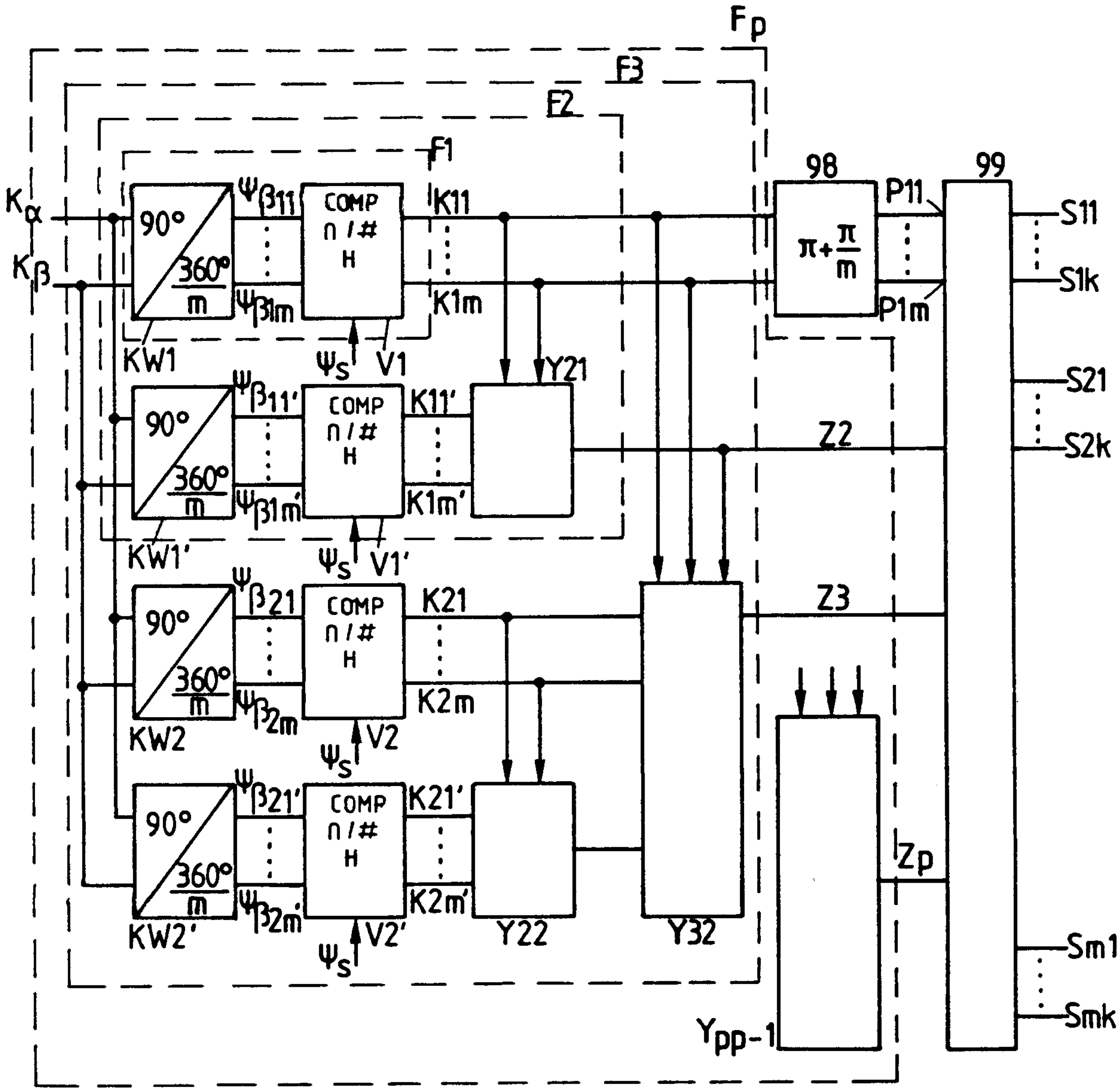
Fp
F3
F2
F1
Kα
Kβ
90°
360°
m
COMP
Π / #
H
K11
K1m
KW1
Ψs
V1
Y21
K11'
K1m'
KW1'
V1'
K21
K2m
KW2
V2
K21'
K2m'
KW2'
V2'
Y22
Y32
98
π+π/m
P11
P1m
99
S11
S1k
S21
S2k
Z2
Z3
Zp
Ypp-1
Sm1
Smk

FIG. 21